# EUROPEAN PATENT APPLICATION

(11) **EP 2 688 026 A1**
(43) Date of publication of application: **22.01.2014**
(21) Application number: 12177115.8
(22) Date of filing: 19.07.2012
(51) Int. Cl.: G06Q 20/40

(54) **Method of performing a mobile transaction and system for performing a mobile transaction**

(71) Applicant: Halldorsdottir, Dagny, 210 Gardabaer (IS)
(72) Inventor: Halldorsdottir, Dagny, 210 Gardabaer (IS)
(74) Representative: Nielsen, Henrik Sten

(57) **Abstract**

The invention provides a method of performing a mobile transaction and a system for performing a mobile transaction. In the method and the system a transaction terminal at a merchant generates a first transaction request comprising a transaction terminal ID and a mobile transaction identification information, such as preset card information. The first transaction request is sent to a bank which based on the mobile transaction identification information reroutes the first transaction request to a server. A customer wishing to perform a transaction with the transaction terminal generates and sends a transaction authorization comprising the transaction terminal ID and customer transaction information, such as customer payment card information, to the server. In the server the first transaction request and the transaction authorization are paired based on the matching transaction terminal IDs. A second transaction request is generated or modified from the first transaction request by the server by replacing the mobile transaction identification information with the customer transaction information. The second transaction request is then sent to the bank and processed. The invention provides a method and system for mobile transactions which do not require large changes to current transaction methods and systems or the current payment card infrastructure, further the method and system are more secure as the customer does not disclose his transaction information to the transaction terminal and the merchant.

## Description

The present invention concerns a method of performing a mobile transaction and a system for performing a mobile transaction. More particularly the present invention concerns a method of performing a mobile transaction and a system for performing a mobile transaction where sensitive customer transaction information is not sent to a transaction terminal, rather the sensitive customer transaction information is transferred from a customer mobile device independently from the transaction terminal to a server for use in modifying a first transaction request, sent from the transaction terminal and comprising mobile transaction identification information, into a second transaction request, or alternatively generating the second transaction request using the first transaction request, the second transaction request comprising the customer transaction information. The second transaction request is then processed as a conventional transaction request.

Today, many transactions are carried out using cards such as payment cards.
There are many different types of payment cards in use all over the World. Some are international (e.g. all American Express, Discover, MasterCard and Visa branded payment cards) while others are regional. Some are debit cards and some are credit cards. Some are prepaid cards, some can only be used in specific stores and some have a loyalty function.

Further, some cards, while not actually being used for payments but sharing the same basic technology, are used for loyalty programs or schemes and various kinds of non-financial uses such as accessing restricted areas or computer applications.

In brief, a typical payment card transaction using the current payment card infrastructure involves the following main steps and participants (generally referred to as 4 party system or 3 party system):
1. A customer (cardholder) presents a customer payment card (e.g. credit, debit, pre-paid) e.g. at a merchant's checkout or merchants transaction terminal. The card is issued by the customer's bank, called Card Issuer Issuing Bank, or in general card issuing entity or customer account entity. The merchant's bank is called Merchant Bank or Acquiring Bank (or just acquirer). Card information, such as the card number and the cardholder's name, is stored on the magnetic stripe or the electronic chip present on the card.
2. The information on the card's magnetic stripe or electronic chip is read by a transaction terminal, also called point-of-sale terminal or POS, which can either be a self-standing equipment or part of a fully integrated cash register.
3. The information on the card combined with information about the merchant, the transaction terminal used and the amount to be paid is transmitted as a transaction request, also called authorization request, in the form of a standardised transaction message from the transaction terminal to a transaction network, Payment Gateway, or other service provider, which further routes it to the Merchant Bank's Processor (third-party or in-house at the Merchant Bank).

In many cases the transaction terminal transmits the transaction request directly to the Merchant Bank's Processor. The purpose of this communication is to obtain an authorisation for the amount to be paid from the Issuing Bank so the sale can be completed. After the transaction request has reached the Merchant Bank's processor, the transaction request may be sent to the Card Issuer, unless the customer Merchant Bank and the Card Issuer is the same entity whereby the Merchant bank approves or declines the transaction request and generates a transaction response.

The transaction request is sent to the Card Issuer along one of various predefined communications routes (e.g. through a debit network or through the card associations' networks such as American Express, Discover, MasterCard and Visa). The exact route depends on the exact set-up of the payment infrastructure and the type of payment card and may be different in the various countries of the world. Irrespective of the communications route, the authorisation request will end at the Card Issuer (or someone acting on its behalf), which will either approve or decline the transaction request and generate a transaction response.
4. After generation of the transaction response, the communications route is reversed and the transaction response with the Card Issuer's approval or denial of the transaction request is sent to the merchant's transaction terminal, which reacts accordingly.

Transaction requests that result in authorizations are stored in the merchant's transaction terminal until they are sent in a batch file to the Merchant Bank at the end of the business day or some other time. The Merchant Bank submits them to clearing and settlement, which can be a different process for different types of payment cards.

Payment cards can also be used to pay for purchases on the web. Even though the frontend, i.e. the store and how the information on the card is passed from the customer to the merchant or its service providers, is different on the web, the purpose and main aspects of the communications route as briefly described above and the clearing and settlement process remain the same.

The payment cards themselves as well as the associated communications and the clearing and settlement process are governed by international standards (such as ISO 8583 on financial transaction card originated messages), rules and regulations issued by card associations (e.g. American Express, Discover, MasterCard and Visa) and in many instances domestic rules issued by government departments or central banks.

The widespread harmonisation has ensured that the major card brands (e.g. American Express, Discover, MasterCard and Visa) can be used both domestically and internationally and on the web, irrespective of the country of domicile of the customer or Card Issuer. Furthermore, various standards, rules, regulations and methods have been introduced to minimize the risk of fraud in payment card transactions, especially in transactions where the card is not present, e.g. on the web or over a telephone.

It is apparent from what has been outlined above that the current payment card infrastructure involves considerable legacy costs. Changing or replacing software or hardware to facilitate new technology all over the world is both extremely time consuming and costly, not to mention the risk of compromising the smooth functioning of and security in a well-developed transactions and communications chain.

As technology has advanced and mobile devices, i.e. customer mobile devices such as mobile phones and tablet computers with telecommunications capabilities, have become ever more popular, the desire has emerged to develop secure and convenient solutions for mobile payments. Solutions exist, which store payment card information securely on a customer mobile device, clearly providing more security than traditional payment cards in a wallet or a purse.

Mobile payments can increase the convenience of customers, and even eliminate altogether the need for traditional plastic payment cards. However, many of the solutions that have been suggested, such as the use of near-field communications (NFC) between the customer mobile device and the transaction terminal, require expensive upgrades/replacements of the customer mobile device and the transaction terminal.

An additional difficulty in replacing the existing payment card with customer mobile devices for mobile payments is the security of the financial data. Numerous incidents with payment cards have shown that the financial data is vulnerable to interception as it is transferred to the transaction terminal, or when resident in the transaction terminal or the merchant's computer systems.

This is typically the case for magnetic stripes on magnetic stripe cards from which the card information is easily intercepted, or "skimmed", when used with a compromised transaction terminal or Automatic Teller Machine (ATM). The transaction terminal or ATM may be compromised by computer viruses or malware targeting the servers processing information from the transaction terminal or ATM. Alternatively, the transaction terminal or ATM may be compromised by physically modifying the transaction terminal or ATM to include devices, such as hidden card-readers, miniature cameras or fake keypads, to create a transaction terminal or ATM masquerading as a genuine, un-modified, transaction terminal or ATM. As the customer uses his payment card in such a compromised transaction terminal or ATM, the card information is, unbeknownst to the customer, stored for later retrieval or forwarded for fraudulent purposes. This is also the case with websites which are easily forged to try to lure the customer to disclose card information.

Payment cards having a chip in addition to a magnetic stripe may provide higher security in that, when used with a capable transaction terminal or ATM, the magnetic stripe is not used. Instead, the user is authenticated using a PIN-code and the chip and the transaction terminal actively communicate in processing the payment. There is thus no passive reading of easily intercepted card information from the card.

The increased security, however, depends on the card being used with a capable transaction terminal. If the transaction terminal does not have the capabilities required for interacting with the chip, the result may be that payment using the payment card with the chip is not possible at that transaction terminal, which greatly inconveniences the customer using the card with the chip. On the other hand, if the transaction terminal is compromised such that the interaction between the card and the transaction terminal is intercepted, then the attacker may be able to use the data to make a card with a magnetic stripe which can be used at a transaction terminal allowing the use of magnetic stripes.

One solution for avoiding transferring of financial data such as card information to the merchant's transaction terminal is described in international patent application WO2012012445A2. In the system described in this application, a customer wishing to interact and pay at a certain transaction terminal uses his customer mobile device to receive information identifying the transaction terminal (also called transaction terminal ID), and then sends his intent to perform a financial transaction with the POS, together with the transaction terminal ID, to a transaction authorization system. The transaction terminal ID is for example encoded in a QR code attached as a sticker on the transaction terminal and read using the customer mobile device's camera.

At the same time, the transaction terminal sends the transaction terminal ID together with information about the payment (amount etc.) to the transaction authorization system, possibly routed via a conventional payment system as if it were an ordinary card payment. The transaction terminal may send a special number, inputted manually or provided on a card, for routing to the transaction authorization system. In the transaction authorization system, the information from the customer mobile device and transaction terminal is matched, and forwarded to a payment network. The payment network hosts an e-wallet service with which the customer previously has deposited his financial information. This financial information is now used for processing the payment transaction.

Thus, the financial information in the customer mobile device is never placed in the possession of the transaction terminal, instead it is stored in the payment network's e-wallet, thus preventing interception or storing of the financial information at the transaction terminal.

The system described in WO2012012445A2, however, has a drawback in that it requires modifications to the existing payment network in order to provide the e-wallet solution. Further, customers need to register with the e-wallet solution and upload their financial information to it. In addition, customers might be hesitant about storing their sensitive financial information in the payment network's e-wallet solution.

Another solution for avoiding transferring of financial data to the merchant's transaction terminal is described in international patent application WO2011112990A1, in which a customer can make a payment using his customer mobile device without sending sensitive financial information to the transaction terminal. In the system, the transaction terminal, with which the customer wishes to interact, sends information including the transaction terminal ID and the amount of the payment to the customer's customer mobile device. The customer mobile device then sends this information to the telecommunication service provider to which the custom subscribes for obtaining telecommunication services using his customer mobile device. The telecommunications service provider, based on the identity, such as the telephone number of the customer mobile device, retrieves a customer ID and adds this customer ID to the information from the customer mobile device. The information is now routed from the telecommunications service provider to a financial institution such as an Issuing Bank. The Issuing Bank, based on the customer ID, can now retrieve the customer's sensitive financial information, such as the customer's card number or account number, from a storage area within the Issuing Bank and process the payment using the sensitive financial information.

Although the system described in WO2011112990A1 ensures that the sensitive financial information such as the card information is never communicated to the transaction terminal, by allowing it to remain at the Issuing Bank, this comes at the expense of the modifications needed at the bank and telecommunications service provider to provide the matching between the identity of the customer mobile device and customer ID, and between the customer ID and the sensitive financial information.

A further system for mobile payments is known from WO2008045007A2, in which a customer sends card information via Bluetooth to a server located at the merchant. In this system, although the card information is not communicated to the transaction terminal, it is communicated to the server which, due to the short range of the Bluetooth communication technique, must be placed in proximity of the transaction terminal and thus may be compromised. Further, the merchant is not relieved of the responsibility of keeping the server and the card information safe.

Accordingly, it is an object of the present invention to enable mobile transactions requiring a minimum of modifications to the current payment card infrastructure.

A further object of the present invention is to enable mobile transactions in which the customer transaction information is not disclosed to the transaction terminal.

Yet a further object is to enable mobile transactions which do not require the customer or merchant to register for a new service.

Yet a further object is to provide a simple system for performing mobile transactions.

At least one of these objects and other objects which will be evident from the below description, are according to a first aspect of the present invention achieved by a method of performing a mobile transaction comprising the steps of:
i. providing:
   a. a transaction terminal for generating and sending a first transaction request,
   b. a bank for responding to the first transaction request,
   c. a server connected to the bank,
   d. a customer mobile device for generating and sending a transaction authorization to the server,
ii. generating the first transaction request at the transaction terminal, the first transaction request comprising:
   e. a first transaction terminal ID identifying the transaction terminal,
   f. a mobile transaction identification information identifying the server as the recipient of the first transaction request, and
   g. a first amount,
iii. generating the transaction authorization at the customer mobile device, the transaction authorization comprising:
   h. a second transaction terminal ID identifying the transaction terminal,
   j. a customer transaction information for use by the bank in responding to the first transaction request,
iv. sending the first transaction request to the bank, and receiving the first transaction request at the bank,
v. analyzing the first transaction request at the bank for detecting the mobile transaction identification information,
vi. routing the first transaction request to the server provided the mobile transaction identification information is detected in the first transaction request,
vii. receiving the first transaction request at the server,
viii. sending the transaction authorization to the server, and receiving the transaction authorization at the server,
ix. analyzing the first transaction request by the server for determining the first transaction terminal ID,
x. analyzing the transaction authorization by the server for determining the second transaction terminal ID,
xi. forming a transaction pair comprising the first transaction request and the transaction authorization provided the first transaction terminal ID in the first transaction request corresponds to the second transaction terminal ID in the transaction authorization,
xii. modifying the first transaction request into a second transaction request by replacing the mobile transaction identification information, in the first transaction request in the transaction pair, with the customer transaction information, in the transaction authorization in the transaction pair, or alternatively, generating a second transaction request comprising the first transaction terminal ID and the amount from the first transaction request in the transaction pair, and the customer transaction information from the transaction authorization in the transaction pair,
xiii. sending the second transaction request to the bank, and receiving the second transaction request at the bank,
xiv. responding to the second transaction request by the bank and in doing so responding to the first transaction request, and providing a transaction response, the transaction response comprising:
   k. the first transaction terminal ID,
   m. an approval of the first transaction request,
xv. sending the transaction response to the transaction terminal.

An advantage of the method of performing a mobile transaction according to the first aspect of the present invention is that it can be implemented as an add-on to the conventional method of performing transactions using payment cards. Similarly, customers wishing to participate in the method of performing a mobile transaction do not need to invest in new hardware, instead the customer can use an existing customer mobile device by downloading and/or running an application for configuring his customer mobile device for participation in the method. Thus, the customer, using the customer mobile device, is able to perform the same transaction as those performable using a traditional magnetic stripe or chip card.

A further advantage of the method of performing a mobile transaction according to the first aspect of the present invention is that it preserves the investment made in the current banks and payment card infrastructure. This may include for example the current banking infrastructure, the current Merchant Bank or Card Issuer processors' infrastructure, the current card associations' infrastructure (e.g. American Express, Discover, MasterCard and Visa), the current card payment authorization infrastructure, the current payment networks, the current clearing and settlement infrastructure, the current merchants' infrastructure, the current Payment Gateways and other third-party transaction processing or transaction routing infrastructure, the current transaction terminal infrastructure, the current ATM infrastructure, and the current web shopping infrastructure, etc.

The investment needed by the bank is small, i.e. providing and configuring the server and configuring the bank's infrastructure and/or routing processor to route the first transaction request to the server, and the investment needed by the customer is also small in that the customer mobile device may be a conventional customer mobile device running an application and using the camera with which most conventional customer mobile devices are equipped with.

A further advantage of the method of performing a mobile transaction according to the first aspect of the present invention is that the method is simple to implement, relies on industry standards, and doesn't require new service providers.
There is further no need for either the merchant operating the transaction terminal or the customer to register for a new service or invest in new hardware in order to be able to perform transaction according to the method.

Further, the security of the transaction is enhanced as the customer does not pass the customer transaction information to the merchant, i.e. to the transaction terminal.

The steps may be performed consecutively from step i to xv. Step ii should be performed prior to step iv. Step iii should be performed before step viii. Step ix should be performed after step vii. Step x should be performed after step viii.

In the context of the present invention, the term mobile transaction is to be understood as a transaction utilizing a customer mobile device.
The mobile transaction may involve paying for goods or services, or withdrawing cash from an ATM. The mobile transaction may alternatively comprise a mobile transaction authorization, i.e. an approval or denial of a mobile transaction, where the actual payment is settled at a later time such as by the end of a business day.
A mobile transaction may also comprise transactions for gaining access to facilities or services, transactions for redeeming vouchers or gift cards, etc.

The transaction terminal may comprise a point of sale, a point of sale terminal, a website, a computer, a cash register, an ATM, a payment card terminal, a back office processor connected to a payment card terminal etc.
Preferably, the transaction terminal is a conventional transaction terminal of the kind used to read magnetic stripe cards, chip cards, or NFC cards.
A merchant provides the transaction terminal for allowing the customer to perform transactions using a customer mobile device for obtaining the merchant's goods or services.

In the context of the present invention the term merchant is to be understood as comprising the entity providing goods or services, for which transactions can be made using the transaction terminal, and the owner of said entity. The merchant may for example be a grocery store, a web shop, a bank (operating an ATM) or a petrol station, etc.

The first transaction request may for example be formatted according to ISO 8583.
The first transaction request may comprise additional information such as a merchant-ID identifying the merchant or a PIN code associated with the customer card information.

In the context of the present invention the term Bank is to be understood as also comprising the terms transaction routing network, legacy Processing and Routing network, and transaction service provider. The bank, and thus the transaction routing network, legacy Processing and Routing network and transaction service provider, thus refers to the existing infrastructure that is used to process and route transaction requests, from the transaction terminal to the transaction response processor or card issuing entity (Card Issuer), and at a later stage clear and settle all transaction requests having approved transaction responses which have been collected by the merchant under for example a business day. The bank, the transaction routing network, legacy Processing and Routing network and the transaction service provider may thus interconnect the transaction terminal and for example a customer account entity.
The transaction routing network, legacy Processing and Routing network, and transaction service provider may further comprise a payment gateway, a merchant's bank, a customer, a bank, and a card associations network as American Express, Discover, MasterCard, Visa.
The invention is not restricted to any specific type of bank or communications route between the transaction terminal and the bank or card issuing entity, the invention rather merely requires that the bank, or a component thereof, somewhere in the communications route is configured to analyze the first transaction request to detect the mobile transaction identification information, and provided the mobile transaction identification information is detected in the first transaction request, route the first transaction request to the server. This routing of the transaction request may take place early in the communications route, in the middle, or late in the communications route.

The bank may include a routing processor for analyzing the first transaction request, detecting the mobile transaction identification information, and routing the first transaction request to the server provided the mobile transaction identification information is detected in the first transaction request.

In the context of the present invention, the term responding is to be understood as also comprising providing or forwarding a response.

The server may be separate from the bank, but is preferably operated and comprised by the bank. The server may be or comprise a mobile transaction processor.
The server may be specific for a specific merchant or a specific merchant's bank.
An additional communications server may be provided in the method of performing mobile transactions according to the first aspect of the present invention. The communications server may be comprised by the bank, or alternatively be separate from the bank. The communications server may further be comprised by the server or be separate from the server. The communications server should be interposed between the server and the customer mobile device.
In this embodiment the customer mobile device sends the transaction authorization to the communication server, which forwards the transaction authorization to the server. In the same way, if the server communicates with the customer mobile device, such as by sending any information to the customer mobile device, the information is sent via the communications server.

The customer mobile device may be a programmable mobile phone such as for example an iPhone® or an Android™ mobile phone, a tablet PC such as an iPad® or an Android™tablet PC.
The customer mobile device should provide communication capabilities suitable for sending the transaction authorization to the server. Communication capabilities include for example WiFi, 3G (UMTS), GSM, NMT, Bluetooth, satellite phone network etc.
The communication between the customer mobile device and the server, i.e. the transaction authorization, should be encrypted or otherwise made secure so that the customer transaction information is not easily intercepted. The communication may for example be made using https and/or SSL/TLS

Preferably the customer mobile device includes an application for receiving the transaction terminal ID from the transaction terminal and for generating and sending the transaction authorization.
This is advantageous as it allows any suitable customer mobile device to install and/or run the application to perform a mobile transaction, thus there is no need for the customer to replace an existing customer mobile device, instead the customer only needs to install and/or run the application.
The application should be executable on the customer mobile device and should be capable of receiving the transaction terminal ID from the transaction terminal.
To perform mobile transactions according to the method according to the first aspect of the present invention, the customer should install and/or run the application on his customer mobile device.
The application may include a digital wallet, also called e-wallet, for storing the customer transaction information, preferably encrypted. Alternatively, the application may be configured to access and retrieve the customer transaction information from a file stored on the customer mobile device or from a remote digital wallet where the customer transaction information is stored.
The application, customer mobile device, or the digital wallet may, in addition to the customer transaction information, store further customer transaction information associated with different means of performing transactions, such as different payment cards. Thus, the application may further, before generating and sending the transaction authorization, prompt the customer to select which customer transaction information available to the customer to include in the transaction authorization.
The application may for example be Windows-based, Java based, Linux-based, etc.

The application may further be configured to prompt the customer for a password for opening the application.
The password may be an alphanumeric or alphabetic password or a numeric pin. Further, the password may be a fingerprint signature or a voice signature.
The password may be used to decrypt/encrypt the customer transaction information on the customer mobile device or in the remote digital wallet.
A first password (pin code) may be used for opening the application on the customer mobile device for enabling generating and sending said transaction authorisation.
Preferably, said first password is the PIN associated with said customer transaction information for authenticating said customer transaction information.
Alternatively, the first password merely enables the application, whereby a second password is associated with said customer transaction information.
Preferably, said first or second password is included in said transaction authorization.

Alternatively, the application may be enabled without entering a password, instead a first password is associated with said customer transaction information for authenticating said customer transaction information.
Preferably, said first password is included in said transaction authorization.
Alternatively, said first password is input into said transaction terminal and included in said first transaction request.

The application may further be configured to receive the amount from the server and to prompt the user for confirmation of the amount. Preferably, the server communicates the amount to the application for confirmation if the amount was not comprised by the transaction authorization.

In the context of the present invention, the term transaction terminal ID should be understood as comprising the information needed to uniquely identify the transaction terminal among other transaction terminals sending transaction requests to the bank. Thus, the transaction terminal ID may also include a merchant ID. Thus, for forming the transaction pair, the server can additionally analyze the first transaction request and the transaction authorization to, in addition to the transaction terminal ID, also determine a merchant ID and use the merchant ID, together with the transaction terminal ID, for forming the transaction pair. The transaction terminal ID, or the first transaction request and the transaction authorization may additionally include further information, such as a time stamp or order number included in both the first transaction request and the transaction authorization, for being determined by the server and used for forming the transaction pair.
The transaction terminal ID may be numerical, alphanumerical, alphabetic, binary, hexadecimal etc. The transaction terminal ID may be encrypted.

The mobile payment identification information may be inserted into the first transaction request using a button or shortcut provided in the transaction terminal and activated by an attendant of the transaction terminal, or using a keypad on the transaction terminal. Alternatively the mobile payment identification information may be recorded on a card such as a magnetic stripe card, a chip card, an RFID card, or an NFC card. The card could be read by the transaction terminal using a magnetic stripe reader, a chip reader, an RFID transceiver or an NFC transceiver. Further, the mobile payment identification information could be encoded in a barcode which could be scanned by an attendant of the transaction terminal.

The amount, including the first amount, may comprise the amount of money to be paid for obtaining certain goods or services. Further, the amount may be an amount of points, earned in a loyalty scheme, to be used for obtaining certain goods or services. Alternatively, the amount may represent goods or services.

The transaction authorization may be formatted in any format capable of conveying the second transaction terminal ID and the customer transaction information to the server.
The transaction authorization is preferably encrypted or otherwise made secure so that the customer transaction information is not easily intercepted. The transaction authorization may for example be sent using https and/or SSL/TLS.

The second terminal ID should be the same as the first transaction terminal ID for a specific customer performing a transaction at a specific transaction terminal.

The transaction authorization may comprise further information such as an order or reference number, an amount to be paid and/or instructions for the server for the processing of the transaction authorization, as exemplified in scenario 5 further below.

The step of generating the transaction authorization includes combining said second transaction terminal ID with said customer transaction information.

The first transaction request may be sent via telephone lines, fibre lines, internet connections, etc., to the bank. The first transaction request may be encrypted.

The first transaction request is preferably received by a routing processor comprised by the bank, the routing processor or the bank being configured to analyze the first transaction request to detect the mobile transaction identification information, and to route the first transaction request to the server provided the mobile transaction identification information is detected. The bank or the routing processor should further be configured not to forward conventional transaction request, not comprising the mobile transaction identification information but instead comprising conventional customer's card information such as from conventional payment cards, to the server so that these conventional transaction requests are processed by the bank in the conventional way.

In the context of the present invention, the term routing should be understood as comprising the forwarding of the element referred to, as well as forwarding a copy of the element received by the entity performing the routing.

The server may include storage for storing the first transaction request and other transaction requests until the transaction authorization and other transaction authorizations having the same transaction terminal ID as the transaction request have been received, and vice versa.
Preferably, the server comprises storage for storing the first transaction request as a pending transaction request and the transaction authorization as a pending transaction authorization.

The server may keep a first list containing details including the first transaction terminal ID of the pending transaction requests, and a second list containing details including the second transaction terminal ID of the pending transaction authorizations.

In the context of the present invention, the term forming a transaction pair is to be understood as also comprising the association of a first transaction request with a transaction authorization provided the first transaction terminal ID corresponds to the second transaction terminal ID.
For forming the transaction pair, further information shared by the first transaction request and the transaction authorization may be determined and used. This further information may for example include a merchant ID, the transaction amount, a time stamp, an order number etc. If further information is to the used, the further information is preferably included in both the first transaction request and the transaction authorization

The server may comprise storage for storing the second transaction request once it is formed.

The second transaction request may also be called an effective transaction request in that it, in contrast to the first transaction request, contains all the information as is contained in a conventional transaction request, in particular the customer transaction information needed for being processed by the bank as a conventional transaction request stemming from a conventional payment card being used in a conventional transaction terminal.

The second transaction request may for example be formatted according to ISO 8583.
The second transaction request may comprise information carried over or taken from the first transaction request such as a merchant-ID identifying the merchant or a PIN code associated with the customer card information. The second transaction request may further comprise additional information provided from the server.

The bank responds to the second transaction request by using at least the first amount and the customer transaction information for providing a transaction response determining whether or not the transaction request is allowable. The bank may evaluate or use further information supplied with the second transaction request or generated or stored by the bank, such as the transaction terminal ID, a time stamp, a country code associated with the location of the transaction terminal, or a history of previous transactions made by the customer to provide the transaction response.
The bank may provide the transaction response by generating the transaction response itself, or by obtaining a transaction response from a further entity.

The transaction response may for example be formatted according to ISO 8583.
The transaction response may comprise further information such as a time stamp, an accounts statement for an account associated with the customer transaction information, etc.
In case the there are insufficient funds, or the first amount exceeds a maximum amount allowed by the bank, the transaction request may, instead of an approval, comprise a denial of the second transaction request and therefore a denial of the first transaction request.

The transaction response may be sent to the transaction terminal by the bank.
In some embodiments of the method of performing a mobile transaction according to the first aspect of the invention, the method further comprises the step of sending the transaction response, or a copy thereof, to the server by the bank.

The transaction response may additionally comprise the customer transaction information. If this is the case the transaction response is preferably, after step xiv and before step xv, sent to the server. After the transaction response has been received by the server the customer transaction information comprised by the transaction response is deleted or removed, or preferably, replaced with the mobile transaction identification information. Thereafter the transaction response, now no longer comprising the customer transaction information, is sent back to the bank and received by the bank.
This is advantageous as it prevents the customer transaction information from being disclosed to the transaction terminal via the transaction response.

In accordance with the preferred embodiment of the method of performing a mobile transaction the method further comprises the steps:
xvi. providing a customer account entity connected to the bank for authorizing the first transaction, the customer account entity comprising:
   n. a customer account associated with the customer transaction information, the customer account further comprising:
      i. a second amount.
xvii. sending at least the first amount and the customer transaction information to the customer account entity, and receiving at least the first amount and the customer transaction information at the customer account entity
xviii. comparing the first amount and the second amount by the customer account entity, and, provided the first amount is less than the second amount, authorizing the second transaction request and in doing so authorizing the first transaction request and generating a transaction response, the transaction response comprising:
   o. the first transaction terminal ID,
   p. an approval of the first transaction request
xix. sending the transaction response to the bank.

This is advantageous as the customer transaction information need not be associated with the bank responding to the second transaction request.
Steps xvii to xix are preferably performed consecutively from step xvii to xix after step xiii and before step xv.
The customer account entity is preferably a card issuing entity, Card Issuer or Issuing bank. The customer account is preferably an account associated with the customer transaction information. The customer account may be a credit account, a debit account, a charge account, a stored value account, etc.
The second amount may comprise the amount of money in the customer account. Further, the second amount may be an amount of points, earned in a loyalty scheme, to be used for obtaining certain goods or services. Alternatively, the second amount may represent goods or services.

Preferably, the bank sends the second transaction request to the customer account entity.
In addition to comparing the first amount and the second amount, the customer account entity may evaluate or use further information supplied with the second transaction request or generated or stored by the customer account entity, such as the transaction terminal ID, a time stamp, a country code associated with the location of the transaction terminal, a history of previous transactions made by the customer to generate the transaction response.

In some embodiments of the method of performing a mobile transaction, the method further comprises the step of
xx. sending a copy of the transaction response by the server to the customer mobile device.

This is advantageous as it allows a user of the customer mobile device, i.e. a customer, to obtain a receipt of the transaction. The copy is preferably sent using 3G, 4G or gprs, but may alternatively be sent as an email or as an SMS or MMS. The copy may, if desired, comprise only a subset of the transaction response.
The copy may be sent via a communications server as discussed above.

Preferably, step xx further comprises, prior to sending a copy of the transaction response by the server to the customer mobile device, sending a copy of the transaction reponse to the server by the bank.

Step xx is preferably performed after step xiv.

In accordance with the preferred embodiment of the method of performing a mobile transaction the method further comprises the steps:
xxi. analyzing the first transaction request by the server for determining the first amount,
xxii. sending the first amount to the customer mobile device by the server, and obtaining a confirmation of the first amount from the customer mobile device by the server, and
xxiii. provided the confirmation is not obtained within a selected time from sending the first amount to the customer mobile device, alerting the transaction terminal and/or the customer mobile device to the fact that the server has not obtained the confirmation.

This is advantageous as it allows the customer to confirm the first amount, thereby increasing the security for the customer. Further, the selected time increases the security for the merchant by ensuring that the transaction is performed efficiently, i.e. within the selected time. The confirmation may include an approval or denial of the first amount and may further contain the second transaction terminal ID and/or the first amount. Instead of an approval or denial of the first amount, the confirmation may comprise the first amount, in which case the server compares the first amount sent to the customer mobile device with the first amount comprised by the confirmation to see if they match, a match indicating that the customer mobile device has confirmed (approved) the first amount. The customer mobile device, or the application, may allow the customer to modify the first amount sent to the customer mobile device for the purposes of giving the merchant a tip.
The confirmation may for example be a string or a number.
The selected time may range from seconds up to hours or days depending on the type of merchant. For smaller goods and services such as those offered in a grocery store, a relatively short selected time could be used, whereas for larger purchases, such as for vehicles and houses, a longer selected time could be set to allow time for paperwork during the transaction. The selected time is set in the programming of the server.
The server may for example be configured to record a first time point when the first amount is sent to the customer mobile device and record a second time point when the confirmation is obtained by the server. After alerting the transaction terminal or the customer mobile device, the server may proceed to terminate the transaction by for example deleting the first transaction request. Alternatively, the server may try to obtain the confirmation by once more sending the first amount to the customer mobile device.
Steps xxi to xxiii are preferably performed consecutively from step xxi to xxiii after step vii.

In accordance with the preferred embodiment of the method of performing a mobile transaction, the method further comprises the steps of:
xxiv. recording a first time point when the first transaction request is received by the server
xxv. recording a second time point when the transaction pair has been formed, and
xxvi. provided the time period between the first time point and the second time point exceeds a selected time period, performing one or more of the substeps of:
   q. alerting the transaction terminal and/or the customer mobile device to the fact that the time period between the first time point and the second time point exceeds the selected time period,
   r. deleting the first transaction request,
   s. deleting the transaction authorization,
   t. deleting the transaction pair.

This is advantageous as it increases the security for the merchant by ensuring that the transaction is performed efficiently, i.e. within the selected time period.
The first and second time points may be recorded and stored in the first transaction request or may alternatively be recorded and stored in a register.
The time period is the time elapsed between the first time point and the second time point, if the first transaction request is received by the server before the transaction authorization, or alternatively, the time elapsed between the second time point and the first time point if the transaction authorization is received by the server before the the first transaction request.
The selected time period may range from seconds up to hours or days depending on the type of merchant. For smaller goods and services such as those offered in a grocery store, a relatively short selected time could be used, whereas for larger purchases, such as for vehicles and houses, a longer selected time could be set to allow time for paperwork during the transaction. The selected time period is set in the programming of the server.
Preferably, the server deletes the first transaction request, the transaction authorization and the transaction pair if the time period exceeds the selected time period so as to ensure an efficient processing of the transaction. Alternatively, the server may proceed with the transaction after alerting the transaction terminal and the customer mobile device.
Steps xxiv to xxvi are preferably performed after steps vii and viii. Steps xxiv and xxv, in any order, should be performed prior to step xxvi.

In accordance with the preferred embodiment of the method of performing a mobile transaction, the method further comprises the step of:
xxvii. storing the customer transaction information on the customer mobile device.

This is advantageous as it is a simple way of storing the customer transaction information. This allows, for example, the customer to input the customer transaction information directly into the customer mobile device and/or application. The customer may additionally input and manage the password for executing the application.
The customer transaction information may be stored as an encrypted file, or in an e-wallet or encrypted structure. It is contemplated within the context of the present invention that the customer transaction information could be stored on a specific secure hardware chip connected to, or comprised by the customer mobile device's hardware. However, due to the cost of upgrading or replacing a customer mobile device for providing storing of the customer transaction information on a specific secure hardware chip, it is preferred that the customer transaction information is stored on the customer mobile device's internal memory or a removable memory card.
Step xxvii is preferably performed before step iii or simultaneously with step iii.

In alternative embodiments of the method of performing a mobile transaction, the method further comprises the steps of:
xxviii. providing a repository storing the customer transaction information,
xxix. connecting the customer mobile device to the repository, and
xxx. retrieving the customer transaction information from the repository.

This is advantageous as it can provide further security by placing the customer transaction information out of reach of unauthorized persons obtaining the customer mobile device.
The repository may be a server, a server offered by the customer's bank or trusted third party, or an e-wallet service. The customer mobile device or the application may include instructions for connecting to the repository. These instructions may include a customer identification and a password allowing the customer mobile device to access the customer transaction information. Alternatively, the customer mobile device or the application may prompt the customer to provide the customer identification and the password to access the customer transaction information.
The customer mobile device may connect to the repository via 3G, WiFi, gprs, etc.
The step of retrieving may include retrieving a copy of the customer transaction information. Alternatively, the customer transaction information may be deleted from the repository once it is retrieved and deposited back into the repository once the transaction authorization has been sent. This alternative is advantageous as it prevents fraud since the customer transaction information may only be used for a single transaction authorization at a time.
Steps xxix to xxx are preferably performed consecutively from step xxix to xxx before step iii or simultaneously with step iii. Step xxviii is preferably performed before step xxix.

In accordance with the preferred embodiment of the method of performing a mobile transaction, the method further comprises the steps of:
xxxi. providing the second transaction terminal ID to the customer mobile device, and,
xxxii. obtaining the second transaction terminal ID by the customer mobile device.

The second transaction terminal ID may be provided by Bluetooth, Near Field Communications (NFC), Wi-Fi, IR, manual input on a keyboard (physical or on-screen) of the customer mobile device, etc., or by a barcode such as a QR code.
The second transaction terminal ID may be obtained via Bluetooth, Near Field Communications (NFC), Wi-Fi, IR, or via the customer mobile device's keyboard (physical or on-screen), or by an optical sensor on the customer mobile device, possibly controlled by the application.
Steps xxxi and xxxii are preferably performed consecutively from step xxxi to xxxii before step iii or simultaneously with step iii.

In some embodiments of the method of performing a mobile transaction, the method further comprises the steps of:
xxxiii. providing a second amount to the customer mobile device,
xxxiv. obtaining the second amount by the customer mobile device, and
xxxv. including the second amount in the transaction authorization.

This is advantageous as it provides further security for the customer in that the transaction authorization comprises, and thus is associated with, a specific amount, i.e. not a blanket authorization.
The second amount may be provided by Bluetooth, Near Field Communications (NFC), Wi-Fi, IR, manual input on a keyboard (physical or on-screen) of the customer mobile device, etc., or by a barcode such as a QR code.
The second amount may be obtained via Bluetooth, Near Field Communications (NFC), Wi-Fi, IR, or via the customer mobile device's keyboard (physical or on-screen), or by an optical sensor on the customer mobile device, possibly controlled by the application.
Steps xxxiii to xxxv are preferably performed consecutively from step xxxiii to xxxv before step iii or simultaneously with step iii.

In some embodiments of the method of performing a mobile transaction in which method a second amount is provided to the customer mobile device, the method may further comprise the steps of:
xxxvi. comparing the first amount in the first transaction request with the second amount in the transaction authorization by the server and
xxxvii. terminating the method provided the first amount in the first transaction request does not correspond to the second amount in the transaction authorization.

This is advantageous as it increases the security for the customer in that it ensures that the transaction is only carried out if the amounts match. This further relieves the customer of having to confirm the first amount. The customer mobile device or the application may be configured to display the second amount prior to generating the transaction authorization. The step of terminating the method may include deleting the first transaction request and/or the transaction authorization from said server. It is contemplated within the context of the present invention that, instead of terminating the method, the server may send the first amount to the customer mobile device to obtain a confirmation of the first amount, as described above with reference to steps xxii to xxiii.
Steps xxxvi to xxxvii are preferably performed consecutively from step xxxvi to xxxvii after step xxxv and steps vii and viii.

In some embodiments of the method of performing a mobile transaction, the method further comprises the steps of,
xxxviii. providing an address, to the server, to the customer mobile device by the transaction terminal, and
xxxix. obtaining the address by the customer mobile device.

This is advantageous as it allows different merchants to specify different servers for receiving the transaction authorization.
The address may be an address leading directly to the server, or may alternatively be an instruction to the customer mobile device or the application on where to find the address to the server. The address may for example be an IP address or an URL. Further, the address may be a name or a number associated with a server on a list of servers available to the customer mobile device and/or the application.
The address may be provided together with the second transaction terminal ID, or may be provided separate from the second transaction terminal ID.

The address may be provided by Bluetooth, Near Field Communications (NFC), Wi-Fi, IR, manual input on a keyboard (physical or on-screen) of the customer mobile device, etc., or by a barcode such as a QR code.
The address may be obtained via Bluetooth, Near Field Communications (NFC), Wi-Fi, IR, or via the customer mobile device's keyboard (physical or on-screen), or by an optical sensor on the customer mobile device, possibly controlled by the application.
Steps xxxviii to xxxix are preferably performed consecutively from step xxxviii to xxxix before step iii or simultaneously with step iii.

In the preferred embodiment of the method of performing a mobile transaction, the method further comprises the step of:
xl. displaying a barcode by the transaction terminal, the barcode comprising the second transaction terminal ID, the second amount and/or the address, and the customer mobile device comprising an optical sensor for reading the barcode.

This is advantageous as a barcode is a simple and in-expensive means of providing the second transaction terminal ID, the second amount, and/or the address, to the customer mobile device. The barcode may for example be printed on a sticker or card affixed to the transaction terminal. Alternatively, the barcode may be displayed on a screen.
This may be used for providing the second transaction terminal ID, the second amount, and/or the address to the customer mobile device.
The barcode may additionally comprise instructions to the server.
The barcode may additionally be encrypted to increase security.
The barcode may be a one-dimensional barcode, but is preferably a two-dimensional barcode such as a QR-code.
The QR code should at least comprise the transaction terminal ID and may additionally comprise a merchant ID, an address to the server or information instructing the customer mobile device where to send the transaction authorization.
The QR code may be a static QR code. Alternatively, the QR code may be dynamically generated by the transaction terminal. A static QR code contains information that is the same for all transactions performed with a specific transaction terminal. This information included the transaction terminal ID, the merchant ID, and/or an address to the server or information instructing the customer mobile device where to send the transaction authorization. A dynamically generated QR code may, in addition to the transaction terminal ID, the merchant ID, and/or an address to the server or information instructing the customer mobile device where to send the transaction authorization, also include information such as the amount of the transaction, a time stamp, or a receipt of the transaction.
If the transaction terminal is capable of generating a dynamically generated QR code, the transaction terminal ID may for example also be specific for the transaction. This is advantageous where for example different merchants share a transaction terminal and wishes the merchant ID and/or the transaction terminal ID to be different for the different merchants.
To generate a dynamically generated QR code the transaction terminal may include a suitable processor and/or software for generating the dynamically generated QR code.

The QR code may for example be printed on a sticker or other plane surface and affixed to the transaction terminal or displayed in proximity to the transaction terminal. Alternatively, the QR code could be displayed on a computer screen such as a CRT, LCD or LED screen.
The optical sensor is preferably a camera comprised by, or connectable to, the customer mobile device. Where the camera is connectable to the customer mobile device, it may for example be a web-camera.
It is further contemplated within the context of the present invention that the optical sensor could be a scanner, such as a handheld scanner or a flat-bed scanner, connectable to the customer mobile device. In this case, the transaction terminal could be a web site and the barcode could be printed on a sheet of paper, a card, or a catalog or brochure, and scanned by the scanner.
Step xl is preferably performed before step iii or simultaneously with step iii.

In accordance with the preferred embodiment of the method of performing a mobile transaction, the customer transaction information comprises customer card information, and the mobile payment identification information comprises preset card information.

This is advantageous as it requires a minimum of changes to the current payment card infrastructure.
In the context of the present invention, the term preset is to be understood as also comprising the terms selected, preselected, set, and previously agreed upon. Thus the preset card information is card information which the bank recognizes and knows how to process.
The preset card information is preferably preset payment card information and includes at least a preset card number or preset primary account number. Further, the card information may include a preset name and a preset expiration date. Preferably, to allow the simplest integration with the conventional methods of performing transaction using conventional payment card, the preset card information should be the same as that comprised by a conventional magnetic stripe or chip payment card and as specified by ISO/IEC 7813.

The mobile transaction identification information may for example comprise a preset or set card number formatted according to ISO/IEC 7812, in which the first six digits comprise an issuer identifier number (IIN) associated with the server so that the bank, upon detecting the mobile transaction identification information, can route the first transaction to the server. A range of issuer identification numbers may be used to route the first transaction request to different servers for example depending on the merchant. Further, the remaining digits in the preset card number may also be used for routing the first transaction request to the server or for instructing the server.

Thus, as a simple example, the mobile transaction identification information may comprise a card number in which the issuer identifier number is 5999 99, the first digit 5 being the major industry identifier (MII) for the banking and financial industry. This card number is preset or set, meaning that the bank or a routing processor comprised by the bank, upon analyzing the first transaction and detecting this number, can compare this number to a registry of issuer identifier numbers for retrieving routing instruction for routing the first transaction request to the server. The registry may be the ISO Register of Card Issuer Identification Numbers, or may be a specific registry operated by the bank or the routing processor.

It is further contemplated within the context of the present invention that mobile payment identification information could be embodied by the absence of any card information at all. In this case the bank or the routing processor should be configured to forward all transaction requests lacking card information to the server.

The customer card information is preferably customer payment card information. The card information includes at least the card number or primary account number. Further, the card information may include the name of the customer and the expiration date. Preferably, to allow the simplest integration with the conventional methods of performing transactions using conventional payment card, the card information should be the same as that comprised by a conventional magnetic or chip payment card and as specified by ISO/IEC 7813.
The card information may be associated with a debit card, a credit card, a charge card, a stored value card, a fleet card, a gift card, etc.

At least one of these objects, and other objects which will be evident from the below description, are further, according to a second aspect of the present invention, achieved by a system for performing a mobile transaction, the system comprising:
xli. a transaction terminal for generating and sending a first transaction request,
xlii. a bank for responding to the first transaction request,
xliii. a server connected to the bank,
xliv. a customer mobile device for generating and sending a transaction authorization to the server,
xlv. the transaction terminal being configured to generate the first transaction request, the first transaction request comprising:
   u. a first transaction terminal ID identifying the transaction terminal,
   w. a mobile transaction identification information identifying the server as the recipient of the first transaction request, and
   y. a first amount,
xlvi. the customer mobile device being configured to generate the transaction authorization, the transaction authorization comprising:
   z. a second transaction terminal ID identifying the transaction terminal,
   aa. a customer transaction information for use by the bank in responding to the first transaction request,
xlvii. the transaction terminal further being configured to send the first transaction request to the bank, and the bank being configured to receive the first transaction request,
xlviii. the bank being configured to analyze the first transaction request for detecting the mobile transaction identification information,
xlix. the bank further being configured to route the first transaction request to the server provided the mobile transaction identification information is detected in the first transaction request,
I. the server being configured to receive the first transaction request,
Ii. the customer mobile device further being configured to send the transaction authorization to the server, and the server further being configured to receive the transaction authorization,
Iii. the server being configured to analyze the first transaction request server for determining the first transaction terminal ID, and to analyze the transaction authorization by for determining the second transaction terminal ID,
Iiii. the server being configured to form a transaction pair comprising the first transaction request and the transaction authorization provided the first transaction terminal ID in the first transaction request corresponds to the second transaction terminal ID in the transaction authorization,
liv. the server being configured to modify the first transaction request into a second transaction request by replacing the mobile transaction identification information, in the first transaction request in the transaction pair, with the customer transaction information, in the transaction authorization in the transaction pair, or alternatively, the server being configured to generate a second transaction request comprising the first transaction terminal ID and the amount from the first transaction request in the transaction pair, and the customer transaction information from the transaction authorization in the transaction pair,
Iv. the server being configured to send the second transaction request to the bank, and the bank being configured to receive the second transaction request
Ivi. the bank being configured to respond to the second transaction request and in doing so respond to the first transaction request, and provide a transaction response, the transaction response comprising:
   bb. the first transaction terminal ID,
   cc. an approval of the first transaction request,
Ivii. the bank being configured to send the transaction response to the transaction terminal.

In some embodiments of the system for performing a mobile transaction according to the second aspect of the present invention, the bank is further, or instead of, configured to send the transaction response to the transaction terminal, configured to send the transaction response, or a copy thereof, to the server.

An advantage of the system for performing a mobile transaction according to the second aspect of the present invention, is that it is simple and can be provided with small changes to the current payment card infrastructure.

The invention and its many advantages will be described in more detail below with reference to the accompanying schematic drawings, which for the purpose of illustration show some non-limiting embodiments, and in which:
Fig. 1A shows a method of performing a mobile transaction and a system for performing a mobile transaction according to first embodiments of the first and second aspects of the present invention, Fig. 1A also shows the generation and sending of a first transaction request and a transaction authorization to a server,
Fig. 1B shows different embodiments of a transaction terminal in the first embodiment of the method of performing a mobile transaction according to the first aspect of the present invention,
Fig. 2 shows the modification of the first transaction request into a second transaction request in the first embodiment of the method of performing a mobile transaction according to the first aspect of the present invention,
Fig. 3 shows the sending of the second transaction request to the bank for further routing to a transaction response processor in the first embodiment of the method of performing a mobile transaction according to the first aspect of the present invention,
Fig. 4 shows the processing of the second transaction request by the transaction response processor to generate a first transaction response in the first embodiment of the method of performing a mobile transaction according to the first aspect of the present invention,
Fig. 5 shows the sending of the first transaction response to the server in the first embodiment of the method of performing a mobile transaction according to the first aspect of the present invention,
Fig. 6 shows the modification of the first transaction response into a second transaction response (alternatively the server may be configured not to modify the first transaction response) in the first embodiment of the method of performing a mobile transaction according to the first aspect of the present invention,
Fig. 7 shows the sending of the second transaction response to the transaction terminal (with a modified second response) in the first embodiment of the method of performing a mobile transaction according to the first aspect of the present invention,
Fig. 8 shows the interaction, including the provision of a password, between, on one side the customer and the customer mobile device, and on the other side the customer mobile device and the transaction terminal and the server, in the first embodiment of the method of performing a mobile transaction according to the first aspect of the present invention,
Fig. 9A shows an alternative way of providing a password for authenticating the customer in an alternative embodiment of the method of performing a mobile transaction according to the first aspect of the present invention, and
Fig. 9B shows the use of a dynamically generated QR code in an alternative embodiment of the method of performing a mobile transaction according to the first aspect of the present invention.

In the below description, a superscript roman numeral added to a reference number indicates that the element referred to has the same or similar function as the element designated the non-superscripted reference number, however, differing in structure.

When further embodiments of the invention are shown in the figures, the elements which are new, in relation to earlier shown embodiments, have new reference numbers, while elements previously shown are referenced as stated above. Elements which are identical in the different embodiments have been given the same reference numerals and no further explanations of these elements will be given.

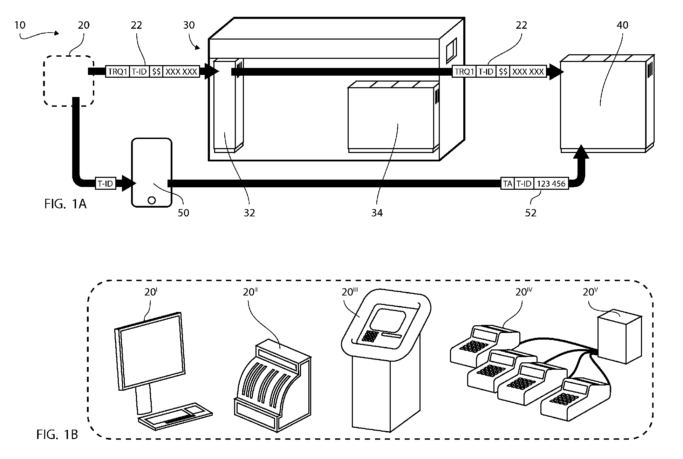

Fig. 1A shows a method of performing a mobile transaction and a system 10 for performing a mobile transaction according to first embodiments of the first and second aspects of the present invention. The mobile transaction system comprises a transaction terminal 20, a bank 30, a server 40, and a customer mobile device 50. The transaction terminal 20 is associated with a merchant (not shown) with whom a customer (not shown) wishes to perform a mobile transaction such as for obtaining goods or services. The transaction terminal 20 is further connected to the bank 30 for sending transaction requests and receiving transaction responses.

In a first step of the first embodiment of the method of performing a mobile transaction according to the first aspect of the present invention, the transaction terminal 20 generates a first transaction request 22 comprising a header, TRQ1, identifying the data as a transaction request, a transaction terminal ID, T-ID, uniquely identifying the transaction terminal from which the first transaction request originates, the amount of the transaction, $$, representing a first amount, i.e. the amount which the customer is to pay to the merchant, and in the place of the customer card number: a preset card information, XXX XXX, representing a mobile transaction identification information, identifying the server 40 as the recipient of the first transaction request 22.

Turning briefly to fig. 1B, different embodiments of the transaction terminal 20 in the first embodiment of the method of performing a mobile transaction according to the first aspect of the present invention are shown.
The transaction terminal 20 may for example comprise a web site, as illustrated by the computer 20^{I}. Thus the customer wishing to perform a transaction at a web site may enter the URL to the website. The website is coded to generate the first transaction request 22, including the preset card information XXX XXX and to send it to the bank 30, and to display a QR code for providing the T-ID to the customer mobile device.
In another embodiment, the transaction terminal comprises a cash register 20^{II} at a point of sale. The cash register 20^{II} may include a button programmed to generate the first transaction request 22 and send it to the bank 30. The cash register 20^{II} may further display a QR code for providing the T-ID to the customer mobile device. Alternatively, the cash register 20^{II} may include a card reader and an attendant of the cash register 20^{II} swipes or pushes in a card comprising the preset card information XXX XXX for generating the first transaction request.

In another embodiment, the transaction terminal 20 comprises an ATM, i.e. Automatic Teller Machine, 20^{III}, including a card reader. The ATM 20^{III} may include a button programmed to generate the first transaction request 22 and send it to the bank 30, or alternatively, the customer wishing to perform a transaction with the ATM 20^{III} carries a card comprising the preset card information XXX XXX and inserts the card in the card reader so that the ATM generates and sends the first transaction request 22 to the bank 30.

In another embodiment, the transaction terminal 20 comprises one or more card terminals, one of which is designated the reference numeral 20^{IV}, and a merchant transaction processor 20^{V} to which the card terminals 20^{IV} are connected. The card terminals 20^{IV} may generate and send the first transaction request 22 to the bank 30 via the merchant transaction processor 20^{V}. Alternatively, the first transaction request 22 is generated by the merchant transaction processor 20^{V} and the card terminals 20^{IV} merely provide the amount $$, the T-ID, and an indication that the transaction is to be routed to the server 40, to the merchant transaction processor 20^{V} for use in generating the transaction request 22.

Returning to fig. 1A, the first transaction request 22 resembles a conventional transaction request with the exception that instead of the customer's card information, the preset card information XXX XXX is used.

The first transaction request 22 is thus sent from the transaction terminal 20 to the bank 30 using the communication protocols used for a conventional transaction request and is received at the bank 30.

On the way from the transaction terminal 20 to the bank 30, the first transaction request may pass through numerous different networks such as telephone lines, internet connections etc., as is known in the art.

The first transaction request 22 is received in the bank 30 by a routing processor 32, which routing processor 32 is configured for analyzing the first transaction request 22 in order to determine the card information comprised by the first transaction request 22. Based on the card information it determines, the routing processor is further configured to route the first transaction request 22 to a transaction response processor 34 or the server 40.

In relation to the preset card information XXX XXX, the routing processor 32 is configured to route all such transaction request containing this card information to the server 40. Thus, the routing processor 32, when determining that the card number comprised by the first transaction request 22 is the preset card information XXX XXX, routes the first transaction request to the server 40.

The routing processor 32 is configured to use a plurality of rules for, based on the card number it determines in any transaction request, routing the transaction request to the server 40, provided it comprises the preset card information, or directly to the transaction response processor 34, provided it comprises a customer's card information.
Thus, the transaction terminal 20 need not be dedicated solely to sending the first transaction request 22. Instead, the transaction terminal 20 can be a conventional transaction terminal also capable of sending transaction request containing customer's card information.

The routing processor 32 is further configured to store details of the first transaction request in a registry and notes in the registry that the first transaction request included in the preset card information in the place of the customer's card information and that the first transaction request was therefore routed to the server 40.

The transaction terminal 20, in addition to generating and sending the first transaction request 22, provides the transaction terminal ID T-ID to the customer mobile device 50. The T-ID is provided by the transaction terminal 20 by being encoded in QR-code displayed by the transaction terminal 20. The T-ID is recorded using the customer mobile device's 50 camera.

The customer mobile device 50 generates a transaction authorization 52 comprising a header TA identifying the data as a transaction authorization, the T-ID, and the customer's card information, 123 456, representing the customer financial information, identifying the account or financial resource the customer wishes to use for performing the transaction.

The transaction authorization is sent from the customer mobile device 50 to the server 40. The transaction authorization may be sent via the cellular network using 3G, GPRS but may also be sent via Wi-Fi to a wireless internet access point and from there via the telephone networks or fibre network (not shown).

If the first transaction request 22 reaches the server 40 before the transaction authorization 52, then the first transaction request 22 is stored as a pending transaction request. If, on the other hand the transaction authorization 52 reaches the server 40 before the first transaction request 22, then the transaction authorization 52 is stored as a pending transaction authorization.

In the server, the first transaction request 22 and the transaction authorization 52 are analyzed for determining a first T-ID, i.e. the T-ID comprised in the first transaction request 22, and for determining a second T-ID, i.e. the T-ID comprised in the transaction authorization 52.
The server is further configured to, once a transaction request and a transaction authorization with matching T-ID have been determined, to form a transaction pair, the transaction pair in the case of fig. 1A comprising the first transaction request 22 and the transaction authorization 52.

Thus, where a plurality of transaction terminals 20 are used in the mobile payments system 10, the server 40 will store a number of pending transaction requests 22 and a number of pending transaction authorizations 52 and the server 40 will further be configured to continuously analyze the transaction requests and the transaction authorizations to determine transaction terminal IDs for forming transaction pairs.

Pending transaction requests are purged from the server 40 after a predetermined time if the server does not receive a transaction authorization comprising a T-ID matching that of the transaction request. Likewise, pending transaction authorizations are purged from the server 40 after a predetermined time if the server does not receive a transaction request comprising a T-ID matching that of the transaction authorization.

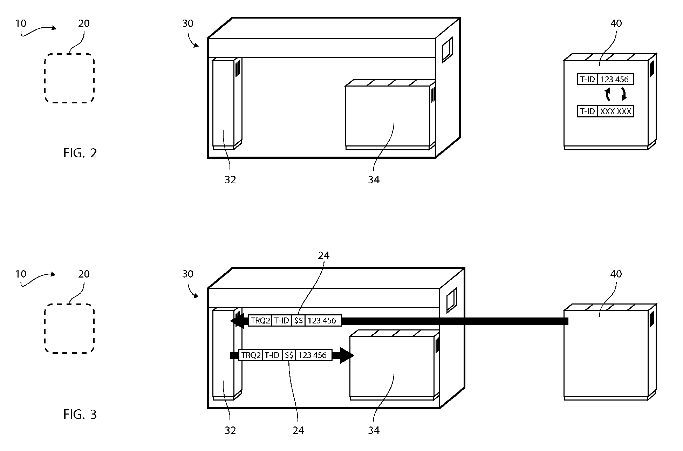

Once a transaction pair comprising the first transaction request 22 and the transaction authorization 52 having matching T-IDs has been formed in the server 40, the server is configured to replace the preset card information XXX XXX in the first transaction request with the customer's card information 123 456 comprised by the transaction authorization 52. The result of this replacement, as shown in fig. 2, is that the first transaction request 22 is modified into a second transaction request 24. The second transaction request 24 comprises a header TRQ2, identifying the data as a transaction request, the T-ID, the amount $$, and, in the place of the customer card number and instead of the preset card information, XXX XXX, the customer's card information 123 456.

The second transaction request 24 is as shown in fig. 3 now sent back to the bank 30 where it is received by the routing processor 32. The routing processor 32 analyzes the second transaction request 24 in order to determine the card number comprised by the first transaction request 24. Upon determining that the card number comprised by the second transaction request 24 is not the preset card information XXX XXX, but instead the customer's card information 123 456, the routing processor is further configured to route the second transaction request 24 to the transaction response processor 34.

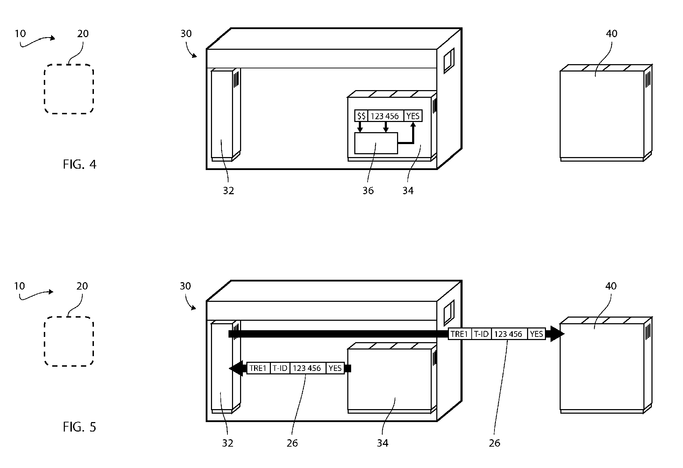

The transaction response processor 34 receives the second transaction request 24 as is shown in fig. 4 and submits the amount $$ and the customer's card information 123 456 to an authorization process 36 for generating a first transaction response 26. The first transaction response 26 comprises a header for identifying the data as a transaction response, the transaction terminal ID, T-ID, the customer's card information 123 456 and an approval YES of the second transaction request 24, the approval YES indicating that the customer having the customer card information 123 456 has the funds necessary for performing a transaction for the amount $$.

The authorization process 36 in fig 4 is performed within the bank 30 since the bank 30 is in possession of account information associated with the customer's card information 123 456 for determining whether or not the customer has the funds needed to perform a transaction for the amount $$. This is the case where the customer holds a debit account with the bank 30 and the customer's card information 123 456 is associated with the debit account for performing transaction, such as payments and cash withdrawals, using the funds in the debit account.

Alternatively the authorization process 36 may be performed outside the bank 30 whereby the bank 30 forwards the second transaction request 24, or alternatively only the amount $$ and the customer's card information 123 456 to a card issuing entity, representing a customer account entity, (not shown) separate from the bank 30. This is for example the case where the customer holds a credit account with the card issuing entity and the customer's card information 123 456 is associated with the credit account for performing transaction, such as payments and cash withdrawals, using the credit in the credit account. In case the bank 30 forwards the second transaction request 24 to the card issuing entity, the card authorization process 36 and the generation of the first transaction response 26 are performed within the card issuing entity and the first transaction response 26 is then sent back to the transaction response processor 34 which in this case merely acts as a router for routing the second transaction request 24 to the card issuing entity and routing the first transaction response 26 to the routing processor 32.

The transaction response processor 34 then sends the first transaction response 26 back to the routing processor 32. By determining the T-ID of the first transaction response 26 and by determining that the card number is a customer's card information 123 456 and not the preset card information XXX XXX, and by consulting the registry in which details of the first transaction request were stored as described with reference to fig. 1, the routing processor 32 recognizes that the first transaction response 26 is associated with the first transaction request 22 and therefore, by the configuration of the routing processor 32, the routing processor 32 routes the first transaction response 26 to the server 40.

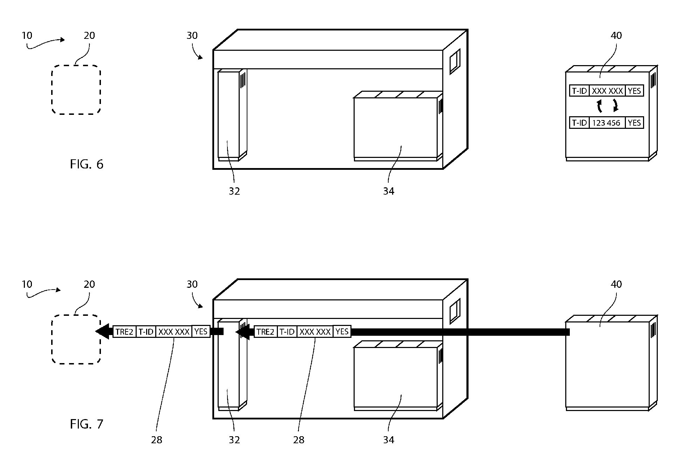

The server 40 is configured to modify the first transaction response, as it is received by the server 40 by replacing the customer's card information 123 456 with the preset card information XXX XXX, as shown in fig 6. The result of the modification is a second transaction response 28 as shown in fig 7. The second transaction response 28 includes a header TRE2 for identifying the data as a transaction response, the transaction terminal ID T-ID, the preset card information XXX XXX and the approval YES.
Alternatively, the server 40 may be configured to generate the second transaction response 28 using the first transaction response 26.

By modifying the first transaction response 26 into the second transaction response 28, it is ensured that the transaction terminal 20 may receive the transaction response, i.e. the second transaction response 28, which allows the merchant to learn whether or not the first transaction request was allowed or authorized, without disclosing the customer's card information to the merchant or the transaction terminal 20.

The second transaction response is sent from the server 40 to the bank 30 where it is rerouted to the transaction terminal 20 by the routing processor 32, which is configured to route transaction responses comprising the preset card information XXX XXX back to the transaction terminal 20.

As is clear from the above description of figs. 1-7, the customer's card information 123 456 is never disclosed to the transaction terminal 20. Thus, even where the transaction terminal 20 has been compromised by a criminal, the criminal will not obtain the customer's card number 123 456. Further, the merchant operating the transaction terminal is no longer responsible for securely handling and storing the customer's card number 123 456 during the transaction.

As an alternative to the sending of the first transaction response 26 to the server 40 and the subsequent modification of the first transaction response 26 to the second transaction response 28 as described above with reference to figures 5-7, a modified first transaction response not comprising the customer's card information 123 456 could be generated by the transaction response processor 34 and/or the authorization process 36. In this case, the modified first transaction response could be sent directly to the transaction terminal 20 via the routing processor 32 without disclosing the customer's card information 123 456 to the transaction terminal 20.

In addition to performing mobile transactions, the system for performing mobile transaction may also be used for cancelling or reversing transactions, as described below.
Transactions may be cancelled by generating a cancellation request on the transaction terminal 20 and sending it to the bank 30. The cancellation request comprises the preset card information XXX XXX, the T-ID, and a cancellation request header CT, (not shown). The cancellation request is routed by the routing processor 32 to the server 40 based on the preset card information XXX XXX similarly to the routing of the first transaction request 22 in fig. 1. Upon receiving the cancellation request, the server 40 searches its storage of pending transaction requests in search of the first transaction request with the same transaction terminal ID as the cancellation request. If such a first transaction request is found, it is purged from the server 40 and the transaction terminal 20 is notified that the cancellation was successful.

If on the other hand the first transaction request with the matching transaction terminal ID has already been paired with the transaction authorization with the matching transaction terminal ID, and a second transaction request has been generated or formed, it is too late to cancel the transaction, and the transaction terminal 20 is notified that the cancellation was unsuccessful.

In this case the mobile transaction can be reversed as follows:
Firstly, the transaction terminal 20 generates and sends a first reversal request, for example specified according to ISO 8583, to the bank 30. The first reversal request comprises the preset card information XXX XXX, the T-ID, the amount, and it only differs from the first transaction request 22 in that it comprises a reversal request header RR1 instead of the Transaction request header TRQ1. The first reversal request is treated and routed by the bank 30 and the routing processor 32 to the server 40 similarly to the first transaction request 22 as described above with reference to fig. 1. The customer mobile device 50 then generates and sends the transaction authorization 52 to the server 40 as described with reference to fig. 1 above. At the server 40, the first reversal request is modified into a second reversal request, for example specified according to ISO 8583, similarly to the modification of the first transaction request 22 into the second transaction request 24 as described above with reference to fig. 2. The second reversal request is then sent to the bank 30 and routed to the transaction response processor 34 by the routing processor 32 similar to the routing of the second transaction request 24 described above with reference to fig. 3. The second reversal request is then sent to the authorization process 36, which performs a reversed transaction, i.e. transfers money from an account associated with the T-ID to an account associated with the customer card information 123 456. A first transaction response is then generated and routed to the server 40 similarly to as described above with reference to fig. 5. In the server 40, the first transaction response is modified into a second transaction response, similarly to as described above with reference to fig. 6. The second transaction response is then routed to the bank 30, and finally sent to the transaction terminal 20 similarly to as described above with reference to fig. 7. A copy of the second transaction response may be forwarded to the customer mobile device 50.

Also, in the case of a reversal request, it is clear that the customer card information 123 456 is not disclosed to the transaction terminal 20.

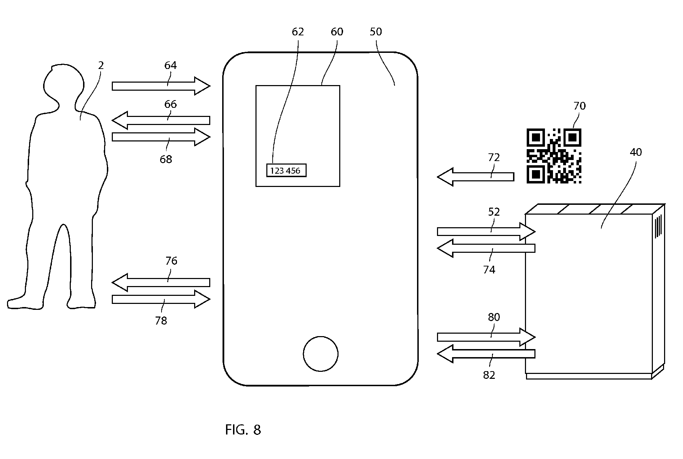

Fig. 8 shows the interaction, including the provision of a password, between, on one side a customer 2 and the customer mobile device 50, and on the other side the customer mobile device 50 and the transaction terminal 20 and the server 40, in the first embodiment of the method of performing a mobile transaction according to the first aspect of the present invention.

The customer mobile device 50 includes an executable application 60. The application further comprises the customers card number 123 456 stored as an encrypted file 62.

To initiate the method of performing a mobile transaction according to the first aspect of the present invention, the user 2 opens the application 60 as indicated by the arrow 64. The opening of the application 60 is protected by a password, therefore the application 60 responds by prompting the user 2 for the password, as indicated by the arrow 66. The user responds by inputting the password as indicated by the arrow 68. The password thus authenticates the user 2 to the application 60 and prevents others from using the application 60 on the customer mobile device 50 for performing transactions using the customers card information 123 456.

If the password 68 is correct, the application 60 activates the customer mobile device's camera for recording the QR code 70, as indicated by the arrow 72, for obtaining the transaction terminal ID.

The application 60 then generates the transaction authorization 52, including the transaction terminal ID, T-ID and the customer's card information 123 456 read from the encrypted file 62, and sends the transaction authorization 52 to the server 40.

Preferably, the server 40, as is shown in fig 8, and after receiving the first transaction request 22 and the transaction authorization 52 as shown in fig. 1A, is configured so that it communicates the amount $$ to the application 60 as indicated by the arrow 74. The application 60 displays the amount $$ to the user 2 and prompts the user 2 to confirm the amount $$ as indicated by the arrow 76. The user 2 confirms the amount $$ by pressing yes, or alternatively, by inputting a higher amount, if for example the user 2 wishes to give a tip to the merchant operating the transaction terminal 20, as indicated by the arrow 78. The confirmation or higher amount is communicated to the server 40 as indicated by the arrow 80, where after the method proceeds as described above with reference to figures 2-7.

The password 68 may be the PIN associated with the customer's card information 123 456 or the application 60 may prompt the customer to enter the PIN before the transaction authorization 52 is sent to the server 40. In this case, the PIN is included in the transaction authorization 52 and submitted to the authorization process 36 for authenticating the user 2 for generating the first transaction response 26.

As an alternative embodiment of the method of performing a mobile transaction according to the first aspect of the present invention, as described above with reference to fig. 8, the application may, after displaying the amount $$ and possibly accepting a higher amount, prompt the customer 2 to input the PIN associated with the customer's card information 123 456, instead of pressing yes as described above. The customer 2 inputs the PIN, in this alternative embodiment indicated by the arrow 78. The PIN is then sent to the server 40, in this alternative embodiment indicated by the arrow 80 and included in the second transaction 24, where after the method proceeds as described above with reference to figures 2-7 with the addition that the PIN is submitted to the authorization process 36 for authenticating the user 2 for generating the first transaction response 26.

As another alternative embodiment of the method of performing a mobile transaction according to the first aspect of the present invention, as described above with reference to fig. 8, the server 40, after receiving the first transaction request 22 and prior to, or after sending the amount $$ as indicated by arrow 74, sends a request for a PIN associated with the customer's card information 123 456 to the application 60. The application 60 then prompts the customer 2 for the PIN, the customer enters the PIN, and the PIN is sent to the server 40, where after the method proceeds as described above with reference to figures 2-7 with the addition that the PIN is submitted to the authorization process 36 for authenticating the user 2 for generating the first transaction response 26.

After the first transaction response 26 has been received by the server 40, as shown in fig. 5, the server 40 is preferably configured so that it communicates a copy of the first transaction response 26, to the application 60 as indicated by the arrow 82. The copy may be displayed by the application 60 to the user 2.

An alternative embodiment of the method of performing a mobile transaction according to the first aspect of the present invention, as described above with reference to fig. 8, differs in that the arrow 74 indicates the server 40 sending a request for a PIN associated with the customer's card information 123 456 to the application 60, the arrow 76 indicates the application 60 prompting the customer 2 for the PIN, the arrow 78 indicates the customer entering the PIN, and the arrow 80 indicates the PIN being sent to the server 40, the remaining features being unchanged.

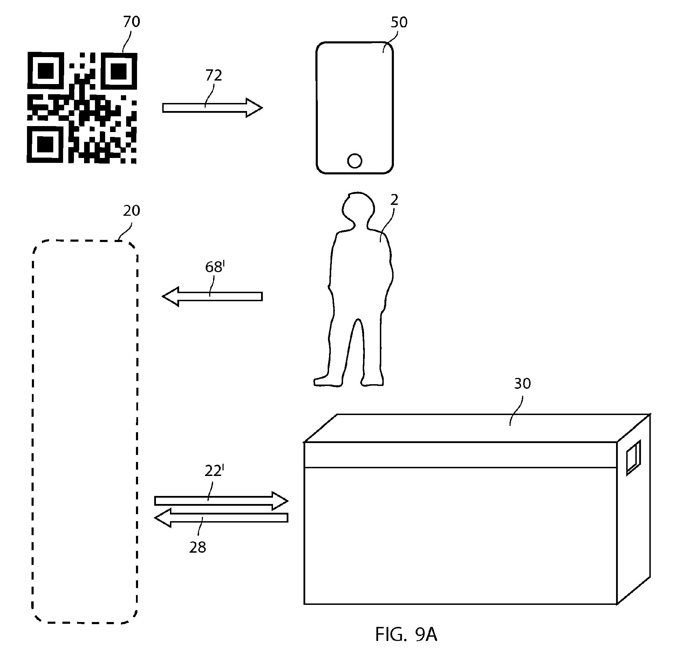

Fig. 9A shows an alternative way of providing a password for authenticating the customer 2 in a second embodiment of the method of performing a mobile transaction according to the first aspect of the present invention. In Fig. 9A, the QR-code 70 is recorded 72 by the application 60 (not shown) resident on the customer mobile device 50 similarly to fig. 8. The user 2 inputs a PIN associated with the customer's card number 123 456 into the transaction terminal 20 as indicated by the arrow 68^{I}, which PIN is then included in a modified first transaction request 22^{I} sent to the bank 30. The modified first transaction request 22^{I} is processed similarly to the first transaction request 22 as described above with reference to the figures 1-7, the difference being that the PIN is also submitted to the authorization process 36 for authenticating the user 2 for generating the first transaction response 26.

Thus, the application 60 can be configured not to require a password to open the application, instead the customer 2, by inputting the PIN 68^{I}, authenticates himself as the person authorized to use the customer's card information 123 456.

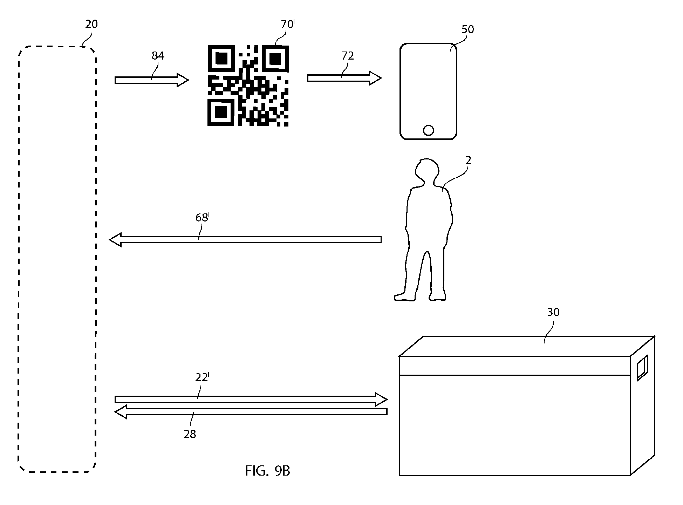

Fig. 9B shows the use of a dynamically generated QR code 70 in a third embodiment of the method of performing a mobile transaction according to the first aspect of the present invention. In fig. 9B, the transaction terminal 20 generates a dynamically generated QR code 70^{I}, as indicated by the arrow 84. The dynamically generated QR code 70^{I} is displayed on for example a computer screen such as a CRT, LCD or LED screen. To generate the dynamically generated QR code 70^{I}, the transaction terminal 20 includes a suitable processor and/or software. The dynamically generated QR code 70^{I} may for example, in addition to the T-ID, further comprise the amount $$ as a second amount, an address to the server 40 such as IP-address or other information instructing the application 60 where to send the transaction authorization 52, a receipt comprising details of the transaction, a time stamp etc.
The dynamically generated QR code is then recorded 72 by the application 60 (not shown) on the customer mobile device 50 as described earlier with reference to figures 8 and 9A.
The user 2 inputs the PIN associated with the card number 123 456 into the transaction terminal 20 and the transaction proceeds as described above with reference to fig. 9A.
Additionally, the transaction terminal 20 can be configured to generate a further dynamically generated QR code (not shown) after it has received the second transaction response 28, the further dynamically generated QR code comprising the second transaction response 28. This further dynamically generated QR code can then be recorded by the application 60 (not shown) on the customer mobile device 50 and stored in the application 60 as a receipt of the transaction.

The present invention is further illustrated with the scenarios described below:
SCENARIO 1 - A customer pays at a merchant's checkout.
   0) Prerequisites:
      a) The customer installs the application on his customer mobile device, which is equipped with a camera,
      b) The merchant puts a QR code on display, the QR code carrying information such as the transaction terminal ID, the address to the server or information instructing the application on the customer mobile device on where the transaction authorization should be sent to,
      c) The bank provides the server and sets up a routine for routing transaction requests containing mobile transaction identification information to the server.
   1) The customer indicates to the merchant that he/she wishes to use a customer mobile device to make a payment.
   2) The merchant treats the sale in a similar manner as when the customer pays with a traditional plastic payment card. The merchant selects the customer mobile device as a payment method instead of e.g. cash or card payment. This generates the first transaction request comprising the preset card information to the server for being modified into the second transaction request with the card information that the customer selects in his/her Customer mobile device (see step 3). The first transaction request is sent by the transaction terminal to the bank.
   3) The customer opens the application on the customer mobile device. The customer may be prompted for a password or a PIN to access the application. The application prompts the customer for the password and activates a QR code reader (camera) on the customer mobile device. The customer mobile device scans the information on the QR code and prompts the customer to select a card information. The customer mobile device connects to the server and transmits the QR code information and the card information. The server may prompt the customer to confirm the purchase amount and may ask for a PIN.
   4) The server within the Bank receives the information from the customer mobile device and the bank receives the transaction request from the transaction terminal. Based on the transaction terminal information, possibly including merchant information received from both the transaction terminal and the consumer mobile device, the bank matches, i.e. pairs the two message strings within the server, i.e. the first transaction request and the transaction authorization, and replaces the preset card information from the transaction terminal with card information received from the customer mobile device. The bank then obtains a transaction response by routing the transaction to a Card Issuer/Card Issuing entity, i.e. the customer account entity.
   5) Optionally, the server communicates the amount, provided the amount was only received from the transaction terminal, to the customer mobile device for confirmation. Further, if the PIN associated with the card information was neither received in the first transaction request, nor in the transaction authorization, the server may ask for a confirmation by PIN.
   6) Once the Card Issuer/Card issuing entity has approved or declined the transaction request, a transaction response is sent back to the transaction terminal and to the customer mobile device if desired.
   7) Once the transaction terminal receives a transaction response containing an approval, the transaction is completed in the usual way and receipts are printed. Alternatively, the merchant's computer system may generate and display a dynamic QR code containing the transaction receipt and the purchase receipt for the customer mobile device.
SCENARIO 2 - A customer pays at a merchant's website
   0) Prerequisites:
      a) The customer installs the application on his customer mobile device which is equipped with a camera,
      b) The merchant installs a QR code generator for generating and displaying a QR code carrying information such as transaction terminal ID, the address to the server or information instructing the application on the customer mobile device where to send the transaction authorization,
      c) The bank provides the server and sets up a routine for routing transaction requests containing mobile transaction identification information to the server.
   1) When the customer is prompted for payment at a website's checkout, payment with a customer mobile device is one of the possibilities. It is irrelevant whether the payment module is an integral part of the merchant's website or if the customer is transferred to a specific payment website run by a trusted third party.
   2) The customer selects to pay with a customer mobile device. This generates a dynamically generated QR code on the website and initiates a first transaction request, comprising a preset card information to the server for being modified into the second transaction request with the card information that the customer selects in his/her customer mobile device (see step 3).
   3) The customer opens the application on the customer mobile device. The customer may be prompted for a password or a PIN to access the application. The application prompts the customer for the QR code and activates a QR code reader (camera) on the customer mobile device. The customer mobile device scans the information on the QR code and displays the purchase amount. It then prompts the customer to select a card information and may instruct the customer to confirm the purchase by entering the associated PIN. The customer mobile device connects to the server and transmits the QR code information, the card information, and the PIN.
   4) The server within the bank receives information from the customer mobile device and the bank receives information from the website. Based on transaction terminal information, possibly including merchant information, received from both the website and the consumer mobile device, the bank, within the server, matches, i.e. pairs, the two message strings, i.e. the first transaction request and the transaction authorization, and replaces the preset card information from the website with card information received from the customer mobile device. The bank then obtains a transaction response by routing the transaction to a Card Issuer/Card Issuing entity, i.e. the customer account entity.
   5) Once the Card Issuer/Card issuing entity has approved or declined the transaction request, a transaction response is sent back to the website, and to the customer mobile device if desired.
   6) Once the website receives a transaction response containing an approval, the transaction is completed in the usual way. Furthermore, the website may generate and display a dynamic QR code containing the transaction receipt and the purchase receipt for the customer mobile device.
SCENARIO 3 - A customer performs ATM transactions
   0) Prerequisites:
      a) The customer installs the application on his customer mobile device which is equipped with a camera,
      b) The ATM puts a QR code on display, the QR code carrying information such as ATM ID, the address to the server or information instructing the application on the customer mobile device where the transaction authorization should be sent,
      c) The bank provides the server and sets up a routine for routing transaction requests containing mobile transaction identification information to the server.
   1) At the ATM, the customer selects to use a customer mobile device instead of inserting a plastic payment card.
   2) The ATM displays a QR code and may prompt the customer to enter the PIN associated with the customer card information to be used. The ATM initiates a transaction request, comprising a preset card information, to the server for being modified into the second transaction request with the card information that the customer selects in the customer mobile device (see step 3).
   3) The customer opens the application on the customer mobile device. The customer may be prompted for a password or a PIN to access the application. The application prompts the customer for the QR code and activates a QR code reader (camera) on the customer mobile device and scans the information on the QR code. The application prompts the customer to select a card information, and, as an alternative to giving the PIN to the ATM, may ask the customer to enter the associated PIN. The customer mobile device connects to the server and transmits the QR code information, card information, and the PIN where applicable.
   4) The server within the bank receives information from the customer mobile device, and the bank receives information from the ATM. Based on the transaction terminal information, i.e. ATM information received from both the ATM and the consumer mobile device, the bank matches, i.e. pairs, the two message strings within the server, i.e. the first transaction request and the transaction authorization, and replaces the preset card information from the ATM with card information received from the customer mobile device.
      The bank then obtains a transaction response by routing the transaction to a Card Issuer/Card Issuing entity, i.e. the customer account entity.
   5) Once the Card Issuer has approved or declined the ATM's transaction request, a transaction response is sent back to the ATM. If approved, the ATM allows the customer to select from its services in the usual manner.
   If declined, a message to that effect is displayed.
SCENARIO 4 - A customer mobile device as a transaction terminal.
   Some merchants accept card payments by using a transaction terminal software on a customer mobile device with a card reader attached to it. With the QR code generator included in the transaction terminal software, the customer mobile device can accept payments from another customer mobile device. The scenario could be the following.
   a) The customer installs the application on his customer mobile device, which is equipped with a camera,
   b) The merchant installs a transaction terminal software on the merchant's customer mobile device, the transaction terminal software being configured to be capable of generating transaction request and receiving transaction responses, and comprising a QR code generator.
   c) The bank provides the server and sets up a routine for routing transaction requests containing mobile transaction identification information to the server.
      1) The customer indicates to the merchant that he/she wishes to use a customer mobile device to make a payment.
      2) To accept a payment from the customer mobile device the merchant opens the transaction terminal software on the merchant's customer mobile device. The merchant keys in the amount to be paid and selects to receive a customer mobile device payment. This initiates a first transaction request, comprising a preset card information to the server for being modified into the second transaction request with the card information that the customer selects in his/her customer mobile device (see step 3). The merchant's customer mobile device then displays a dynamically generated QR code for the customer's customer mobile device to scan.
      3) The customer opens the application on the customer mobile device. The customer may be prompted for a password or a PIN to access the application. The application prompts the customer for the QR code and activates a QR code reader (camera) on the customer mobile device. The customer mobile device scans the information on the QR code. It displays the purchase amount, prompts the customer to select a card information, and to enter the associated PIN. The customer mobile device connects to the server and transmits the QR code information and the card and PIN information.
      4) The server within the bank receives the information from the customer mobile device, and the bank receives the transaction request from the transaction terminal software. Based on the transaction terminal information, possibly including merchant information, received from both the merchant's customer mobile device and the consumer mobile device, the bank matches, i.e. pairs the two message strings within the server, i.e. the first transaction request and the transaction authorization, and replaces the preset card information from the merchants' customer mobile device with card information received from the customer mobile device.
         The bank then obtains a transaction response by routing the transaction to a Card Issuer/Card Issuing entity, i.e. the customer account entity.
      5) Once the Card Issuer has approved or declined the first transaction request, a transaction response is sent back to the transaction terminal software, and to the customer's customer mobile device if desired.
      6) Once the transaction terminal software receives a transaction response containing an approval, the transaction is completed in the usual way and receipts are printed. Alternatively, the transaction terminal software may generate and display a dynamic QR code containing the transaction response and the purchase receipt for the customer mobile device.
SCENARIO 5 - A customer pays a bill
   0) Prerequisites:
      a) the customer installs the application on his customer mobile device which is equipped with a camera,
      b) the merchant prints a QR code on the customer's bill carrying information such as processing instructions to the server (processing code), the bills reference number, the amount to be paid, transaction terminal ID, the address to the server or information instructing the application on the customer mobile device where to send the transaction authorization,
      c) the bank provides the server and sets up a routine for routing transaction requests containing mobile transaction identification information to the server.
   1) The customer opens the application on the customer mobile device. The customer may be prompted for a password or a PIN to access the application. The application prompts the customer for the QR code and activates a QR code reader (camera) on the customer mobile device. The customer mobile device scans the information on the QR code on the bill and displays the purchase amount. It prompts the customer to select a card information and may instruct the customer to confirm the purchase amount by entering the associated PIN. The customer mobile device connects to the server and transmits the authorization request including the QR code information, the card information and the PIN.
   2) The server within the bank receives information from the customer mobile device. The processing code indicates to the server that it is to initiate a transaction request. The server initiates the transaction request using the card information that the customer selected in his/her customer mobile device. The transaction request is then sent to the bank, which then obtains a transaction response by routing the transaction request to a Card Issuer/Card Issuing entity, i.e. the customer account entity.
      As an alternative the server may instead initiate a first transaction request, comprising a preset card information to the server for being modified into a second transaction request with the card information that the customer selected in his/her customer mobile device. The second transaction request is then sent to the bank, which then obtains a transaction response by routing the transaction request to a Card Issuer/Card Issuing entity, i.e. the customer account entity.
   3) Once the Card Issuer/Card issuing entity has approved or declined the transaction request, a transaction response may be sent back to the transaction terminal specified on the bill and to the customer mobile device.
   4) Once the transaction terminal receives a transaction response containing an approval, or once the merchant receives information on the payment from the merchants bank, the transaction may be completed by sending the transaction receipt and the purchase receipt to the customer e.g. by mail or e-mail.

The present invention is further characterized by the following points of the invention:
Point 1. A method of performing a mobile transaction comprising the steps of:
   Iviii. providing:
      dd. a transaction terminal for generating and sending a first transaction request,
      ee. a bank for responding to said first transaction request,
      ff. a server connected to said bank,
      gg. a customer mobile device for generating and sending a transaction authorization to said server,
   lix. generating said first transaction request at said transaction terminal, said first transaction request comprising:
      hh. a first transaction terminal ID identifying said transaction terminal,
      jj. a mobile transaction identification information identifying said server as the recipient of said first transaction request, and
      kk. a first amount,
   Ix. generating said transaction authorization at said customer mobile device, said transaction authorization comprising:
      mm.a second transaction terminal ID identifying said transaction terminal,
      nn. a customer transaction information for use by said bank in responding to said first transaction request,
   Ixi. sending said first transaction request to said bank, and receiving said first transaction request at said bank,
   Ixii. analyzing said first transaction request at said bank for detecting said mobile transaction identification information,
   Ixiii. routing said first transaction request to said server provided said mobile transaction identification information is detected in said first transaction request,
   Ixiv. receiving said first transaction request at said server,
   Ixv. sending said transaction authorization to said server, and receiving said transaction authorization at said server,
   Ixvi. analyzing said first transaction request by said server for determining said first transaction terminal ID,
   Ixvii. analyzing said transaction authorization by said server for determining said second transaction terminal ID,
   Ixviii. forming a transaction pair comprising said first transaction request and said transaction authorization provided said first transaction terminal ID in said first transaction request corresponds to said second transaction terminal ID in said transaction authorization,
   Ixix. modifying said first transaction request into a second transaction request by replacing said mobile transaction identification information, in said first transaction request in said transaction pair, with said customer transaction information, in said transaction authorization in said transaction pair, or alternatively, generating a second transaction request comprising said first transaction terminal ID and said amount from said first transaction request in said transaction pair, and said customer transaction information from said transaction authorization in said transaction pair,
   Ixx. sending said second transaction request to said bank, and receiving said second transaction request at said bank,
   Ixxi. responding to said second transaction request by said bank and in doing so responding to said first transaction request, and providing a first transaction response, said first transaction response comprising:
      oo. said first transaction terminal ID,
      pp. said customer transaction information
      qq. an approval of said first transaction request,
   Ixxii. sending said first transaction response to said server, and receiving said transaction response at said server,
   Ixxiii. modifying said first transaction response into a second transaction response by replacing said customer transaction information with said mobile transaction identification information,
   Ixxiv. modifying said first transaction response into a second transaction response by replacing said customer transaction information with said mobile transaction identification information when the server is configured to do so, and
   Ixxv. sending said second transaction response to said transaction terminal.
Point 2. A method of performing a mobile stransaction authorization comprising the steps of:
   Ixxvi. providing:
      rr. a transaction terminal for generating and sending a first transaction request,
      ss. a customer account entity for responding to said first transaction request,
      tt. a transaction routing network interconnecting said transaction terminal and said customer account entity for routing said first transaction request to said customer account entity, said transaction routing network comprising a mobile transaction processor for processing said first transaction request,
      uu. a communications server connected to said mobile transaction processor,
      ww. a customer mobile device for generating and sending a transaction authorization to the communications server,
   Ixxvii. generating said first transaction request at said transaction terminal, said first transaction request comprising:
      yy. a first transaction terminal ID identifying said transaction terminal,
      zz. a mobile transaction identification information identifying said mobile transaction processor as the recipient of said first transaction request, and
      aaa.a first amount,
   Ixxviii. generating said transaction authorization at said customer mobile device, said transaction authorization comprising:
      bbb.a second transaction terminal ID identifying said transaction terminal,
      ccc. a customer transaction information for use by said customer account entity in responding to said first transaction request,
   Ixxix. sending said first transaction request to said transaction routing network, and receiving said first transaction request in said transaction routing network,
   Ixxx. analyzing said first transaction request in said transaction routing network for detecting said mobile transaction identification information,
   Ixxxi. routing said first transaction request to said mobile transaction processor provided said mobile transaction identification information is detected in said first transaction request,
   Ixxxii. receiving said first transaction request at said mobile transaction processor,
   Ixxxiii. sending said transaction authorization to said communications server, and receiving said transaction authorization at said communications server,
   Ixxxiv. sending said transaction authorization to said mobile transaction processor, and receiving said transaction authorization at said mobile transaction processor,
   Ixxxv. analyzing said first transaction request by said mobile transaction processor for determining said first transaction terminal ID,
   Ixxxvi. analyzing said transaction authorization by said mobile transaction processor for determining said second transaction terminal ID,
   Ixxxvii. forming a transaction pair by said mobile transaction processor, said transaction pair comprising said first transaction request and said transaction authorization provided said first transaction terminal ID in said first transaction request corresponds to said second transaction terminal ID in said transaction authorization,
   Ixxxviii. modifying said first transaction request into a second transaction request by replacing said mobile transaction identification information, in said first transaction request in said transaction pair, with said customer transaction information, in said transaction authorization in said transaction pair, or alternatively, generating a second transaction request comprising said first transaction terminal ID and said amount from said first transaction request in said transaction pair, and said customer transaction information from said transaction authorization in said transaction pair,
   Ixxxix. sending said second transaction request to said transaction routing network, and receiving said second transaction request in said transaction routing network,
   xc. analyzing said second transaction request in said transaction routing network for detecting said customer transaction information,
   xci. routing said second transaction request to said customer account entity provided said customer transaction information is detected in said first transaction request,
   xcii. receiving said second transaction request by said customer account entity,
   xciii. evaluating said second transaction request for responding to said second transaction request by said customer account entity, and in doing so responding to said first transaction request, and generating a transaction response, said transaction response comprising:
      ddd.said first transaction terminal ID,
      eee.an evaluation result
   xciv. sending said transaction response to said transaction terminal.
Point 3. The method according to point 2, wherein said customer account entity further comprises:
   fff.a customer account associated with said customer transaction information, said customer account further comprising:
      ii. a second amount,
   and wherein said evaluation result indicates the result of a comparison between said first amount and said second amount.
Point 4. A method of performing a mobile transaction for paying a bill comprising the steps of:
   xcv. providing a bank for responding to a transaction request,
   xcvi. providing a server connected to said bank for initiating said transaction request,
   xcvii. providing a customer mobile device for generating and sending a transaction package,
   xcviii. providing a bill issued by a merchant, said bill comprising a barcode, said barcode comprising:
      ggg.a merchant ID associated with said merchant,
      hhh.a transaction request initiation instruction instructing said server to initiate said transaction request,
      jjj. a first amount corresponding to the amount of said bill,
   xcix. generating said transaction package by said customer mobile, said transaction package comprising:
      kkk. said merchant ID,
      mmm. said transaction request initiation instruction,
      nnn.said first amount,
      ooo.a customer transaction information for use by said bank in responding to said transaction request,
   c. sending said transaction package to said server, and receiving said transaction package at said server,
   ci. analyzing said transaction package by said server for detecting said transaction request initiation instruction, and, provided said transaction request initiation instruction is detected in said transaction package, initiating said transaction request, said transaction request comprising
      ppp.said merchant ID,
      qqq.said first amount,
      rrr. said customer transaction information
   cii. sending said transaction request to said bank, and receiving said transaction request at said bank,
   ciii. responding to said transaction request by said bank and providing a transaction response, said transaction response comprising:
      sss. said merchant ID,
      ttt. an approval of said transaction request,
   civ. sending said transaction response to said server and receiving said transaction response at said server,
   cv. sending said transaction response, or a copy thereof, to said customer mobile device and receiving said transaction response at said customer mobile device.
Point 5. The method according to point 4, said barcode further comprising a bill reference number for identifying said bill.
Point 6. The method according to any of the points 4-6, said barcode further comprising an address to said server or instructions instructing said customer mobile device on where to send said transaction package.
Point 7. The method according to any of the points 4-6, said customer mobile device comprising an optical sensor and said method further comprising the step of:
   cvi. scanning said barcode by said customer mobile device using said optical sensor for obtaining said transaction terminal ID, said transaction request initiation instruction, and said first amount, and optionally for obtaining said bill reference number and/or said address or said instructions.
Point 8. The method according to any of the points 4-7, said merchant ID comprising a transaction terminal ID associated with a transaction terminal.
Point 9. The method according to any of the points 4-8, further comprising the step of:
   cvii. sending said transaction response, or a copy thereof, to said transaction terminal.

### List of parts with reference to the figures:

| |
|---|
| $$. Amount |
| 123 456. Customer card information |
| TA. Header for transaction authorization |
| T-ID. Transaction terminal ID |
| TRE1. Header for transaction response 1 |
| TRE2. Header for transaction response 2 |
| TRQ1. Header for transaction request 1 |
| TRQ2. Header for transaction request 2 |
| XXX XXX. Preset card information |
| 2. Customer |
| 10. System for performing mobile transactions |
| 20. Transaction terminal |
| 22. First transaction request |
| 24. Second transaction request |
| 26. First transaction response |
| 28. Second transaction response |
| 30. Bank |
| 32. Routing processor |
| 34. Transaction response processor |
| 36. Authorization process |
| 40. Server |
| 50. Customer mobile device |
| 52. Transaction authorization |
| 60. Application |
| 62. Encrypted file |
| 64. Opening application |
| 66. Prompting for password |
| 68. Inputting password |
| 70. QR code |
| 72. Recording QR code |
| 74. Sending amount |
| 76. Prompting customer for confirmation of amount |
| 78. Confirmation of amount |
| 80. Sending confirmation of amount |
| 82. Sending receipt |
| 84. Generating a dynamically generated QR code |

## Claims

1. A method of performing a mobile transaction comprising the steps of:
i. providing:
a. a transaction terminal for generating and sending a first transaction request,
b. a bank for responding to said first transaction request,
c. a server connected to said bank,
d. a customer mobile device for generating and sending a transaction authorization to said server,
ii. generating said first transaction request at said transaction terminal, said first transaction request comprising:
e. a first transaction terminal ID identifying said transaction terminal,
f. a mobile transaction identification information identifying said server as the recipient of said first transaction request, and
g. a first amount,
iii. generating said transaction authorization at said customer mobile device, said transaction authorization comprising:
h. a second transaction terminal ID identifying said transaction terminal,
j. a customer transaction information for use by said bank in responding to said first transaction request,
iv. sending said first transaction request to said bank, and receiving said first transaction request at said bank,
v. analyzing said first transaction request at said bank for detecting said mobile transaction identification information,
vi. routing said first transaction request to said server provided said mobile transaction identification information is detected in said first transaction request,
vii. receiving said first transaction request at said server,
viii. sending said transaction authorization to said server, and receiving said transaction authorization at said server,
ix. analyzing said first transaction request by said server for determining said first transaction terminal ID,
x. analyzing said transaction authorization by said server for determining said second transaction terminal ID,
xi. forming a transaction pair comprising said first transaction request and said transaction authorization provided said first transaction terminal ID in said first transaction request corresponds to said second transaction terminal ID in said transaction authorization,
xii. modifying said first transaction request into a second transaction request by replacing said mobile transaction identification information, in said first transaction request in said transaction pair, with said customer transaction information, in said transaction authorization in said transaction pair, or alternatively, generating a second transaction request comprising said first transaction terminal ID and said amount from said first transaction request in said transaction pair, and said customer transaction information from said transaction authorization in said transaction pair,
xiii. sending said second transaction request to said bank, and receiving said second transaction request at said bank,
xiv. responding to said second transaction request by said bank and in doing so responding to said first transaction request, and providing a transaction response, said transaction response comprising:
k. said first transaction terminal ID,
m. an approval of said first transaction request,
xv. sending said transaction response to said transaction terminal.

2. The method according to claim 1, further comprising the steps:
xvi. providing a customer account entity connected to said bank for authorizing said first transaction, said customer account entity comprising:
n. a customer account associated with said customer transaction information, said customer account further comprising:
i. a second amount.
xvii. sending at least said first amount and said customer transaction information to said customer account entity, and receiving at least said first amount and said customer transaction information at said customer account entity
xviii. comparing said first amount and said second amount by said customer account entity, and, provided said first amount is less than said second amount, authorizing said second transaction request and in doing so authorizing said first transaction request and generating a transaction response, said transaction response comprising:
o. said first transaction terminal ID,
p. an approval of said first transaction request
xix. sending said transaction response to said bank.

3. The method according to any of the claims 1-2, further comprising the step of xx. sending a copy of said transaction response by said server to said customer mobile device.

4. The method according to any of the claim 1-3, further comprising the steps:
xxi. analyzing said first transaction request by said server for determining said first amount,
xxii. sending said first amount to said customer mobile device by said server, and obtaining a confirmation of said first amount from said customer mobile device by said server, and
xxiii. provided said confirmation is not obtained within a selected time from sending said first amount to said customer mobile device, alerting said transaction terminal and/or said customer mobile device to the fact that said server has not obtained said confirmation.

5. The method according to any of the claims 1-4 further comprising the steps of:
xxiv. recording a first time point when said first transaction request is received by said server
xxv. recording a second time point when said transaction pair has been formed, and
xxvi. provided the time period between said first time point and said second time point exceeds a selected time period, performing one or more of the substeps of:
q. alerting said transaction terminal and/or said customer mobile device to the fact that the time period between said first time point and said second time point exceeds said selected time period,
r. deleting said first transaction request,
s. deleting said transaction authorization,
t. deleting said transaction pair.

6. The method according to any of the claims 1-5, further comprising the step of
xxvii. storing said customer transaction information on said customer mobile device.

7. The method according to any of the claims 1-5, further comprising the steps of:
xxviii. providing a repository storing said customer transaction information,
xxix. connecting said customer mobile device to said repository, and
xxx. retrieving said customer transaction information from said repository.

8. The method according to any preceding claim, further comprising the steps of
xxxi. providing said second transaction terminal ID to said customer mobile device, and,
xxxii. obtaining said second transaction terminal ID by said customer mobile device.

9. The method according to any preceding claim, further comprising the steps of:
xxxiii. providing a second amount to said customer mobile device,
xxxiv. obtaining said second amount by said customer mobile device, and
xxxv. including said second amount in said transaction authorization

10. The method according to claim 9, further comprising the steps of,
xxxvi. comparing said first amount in said first transaction request with said second amount in said transaction authorization by said server and
xxxvii. terminating said method provided said first amount in said first transaction request does not correspond to said second amount in said transaction authorization.

11. The method according to any preceding claim, further comprising the steps of,
xxxviii. providing an address, to said server, to said customer mobile device by said transaction terminal, and
xxxix. obtaining said address by said customer mobile device.

12. The method according to any preceding claim, further comprising the step of:
xl. displaying a barcode by said transaction terminal, said barcode comprising said second transaction terminal ID, said second amount and/or said address, and said customer mobile device comprising an optical sensor for reading said barcode.

13. The method according to any preceding claim, said customer transaction information comprising customer card information, and said mobile payment identification information comprising preset card information.

14. A system for performing a mobile transaction, comprising:
xli. a transaction terminal for generating and sending a first transaction request,
xlii. a bank for responding to said first transaction request,
xliii. a server connected to said bank,
xliv. a customer mobile device for generating and sending a transaction authorization to said server,
xlv. said transaction terminal being configured to generate said first transaction request, said first transaction request comprising:
u. a first transaction terminal ID identifying said transaction terminal,
w. a mobile transaction identification information identifying said server as the recipient of said first transaction request, and
y. a first amount,
xlvi. said customer mobile device being configured to generate said transaction authorization, said transaction authorization comprising:
z. a second transaction terminal ID identifying said transaction terminal,
aa. a customer transaction information for use by said bank in responding to said first transaction request,
xlvii. said transaction terminal further being configured to send said first transaction request to said bank, and said bank being configured to receive said first transaction request,
xlviii. said bank being configured to analyze said first transaction request for detecting said mobile transaction identification information,
xlix. said bank further being configured to route said first transaction request to said server provided said mobile transaction identification information is detected in said first transaction request,
I. said server being configured to receive said first transaction request.
Ii. said customer mobile device further being configured to send said transaction authorization to said server, and said server further being configured to receive said transaction authorization,
Iii. said server being configured to analyze said first transaction request server for determining said first transaction terminal ID, and to analyze said transaction authorization by for determining said second transaction terminal ID,
Iiii. said server being configured to form a transaction pair comprising said first transaction request and said transaction authorization provided said first transaction terminal ID in said first transaction request corresponds to said second transaction terminal ID in said transaction authorization,
liv. said server being configured to modify said first transaction request into a second transaction request by replacing said mobile transaction identification information, in said first transaction request in said transaction pair, with said customer transaction information, in said transaction authorization in said transaction pair, or alternatively, said server being configured to generate a second transaction request comprising said first transaction terminal ID and said amount from said first transaction request in said transaction pair, and said customer transaction information from said transaction authorization in said transaction pair,
Iv. said server being configured to send said second transaction request to said bank, and said bank being configured to receive said second transaction request
Ivi. said bank being configured to respond to said second transaction request and in doing so respond to said first transaction request, and provide a transaction response, said transaction response comprising:
bb. said first transaction terminal ID,
cc. an approval of said first transaction request,
Ivii. said bank being configured to send said transaction response to said transaction terminal.
